(19) Europäisches Patentamt European Patent Office Office européen des brevets

(11) **EP 3 396 353 B1**

(12) **EUROPEAN PATENT SPECIFICATION**

(45) Date of publication and mention of the grant of the patent:
**24.04.2024 Bulletin 2024/17**

(21) Application number: **16877176.4**

(22) Date of filing: **10.05.2016**

(51) International Patent Classification (IPC):
*G01N 3/00* (2006.01)    *G01N 3/06* (2006.01)
*G01N 3/18* (2006.01)    *G01N 3/32* (2006.01)
*G01N 3/62* (2006.01)    *G01N 3/48* (2006.01)

(52) Cooperative Patent Classification (CPC):
**G01N 3/62; G01N 3/068; G01N 3/18; G01N 3/32; G01N 3/42; G01N 3/48; G01N 3/54**

(86) International application number:
**PCT/CN2016/081477**

(87) International publication number:
**WO 2017/107362 (29.06.2017 Gazette 2017/26)**

(54) **MATERIAL PROPERTY TESTING APPARATUS AND METHOD FOR IN SITU TESTING**

VORRICHTUNG UND VERFAHREN ZUR IN-SITU-PRÜFUNG VON MATERIALEIGENSCHAFTEN

APPAREIL DE TEST DE PROPRIÉTÉS DE MATÉRIAU ET PROCÉDÉ PERMETTANT DES EPREUVES IN SITU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2015 CN 201510973083**

(43) Date of publication of application:
**31.10.2018 Bulletin 2018/44**

(73) Proprietor: **Jilin University**
**Changchun, Jilin 130022 (CN)**

(72) Inventors:
- **ZHAO, Hongwei**
  **Jilin 130022 (CN)**
- **LIU, Changyi**
  **Jilin 130022 (CN)**
- **MA, Zhichao**
  **Jilin 130022 (CN)**
- **REN, Luquan**
  **Jilin 130022 (CN)**
- **LIU, Xianhua**
  **Jilin 130022 (CN)**
- **ZHOU, Yongchen**
  **Jilin 130022 (CN)**
- **SUN, Jiwen**
  **Jilin 130022 (CN)**
- **QIAO, Yuansen**
  **Jilin 130022 (CN)**
- **REN, Zhuang**
  **Jilin 130022 (CN)**
- **HONG, Kun**
  **Jilin 130022 (CN)**
- **ZHANG, Fu**
  **Jilin 130022 (CN)**
- **FAN, Zunqiang**
  **Jilin 130022 (CN)**
- **ZHANG, Zhihui**
  **Jilin 130022 (CN)**
- **HU, Yong**
  **Jilin 130022 (CN)**
- **DONG, Jingshi**
  **Jilin 130022 (CN)**

(74) Representative: **Patentanwälte Geyer, Fehners & Partner mbB**
**Perhamerstrasse 31**
**80687 München (DE)**

(56) References cited:
**WO-A1-2006/109382    CN-A- 102 323 160**
**CN-A- 102 589 984    CN-A- 103 499 483**
**CN-A- 103 499 483    CN-A- 103 512 803**
**CN-B- 103 353 431    CN-U- 203 551 383**
**CN-U- 204 374 017**

**Description**

**TECHNICAL FIELD**

The present disclosure relates to the field of precise scientific instruments and, more particularly, to a material property in-situ test instrument and method under a composite load mode of mechanical - electric - thermal - magnetic coupling. The material microcosmic property in-situ test instrument and method under a composite load mode of mechanical - electric - thermal - magnetic coupling loading conditions according to the present disclosure can provide one or more of the four mechanical loads of "stretching/compression - low cycle fatigue - torsion - bending", can carry out a microcosmic property test under a "stress field - temperature field (high/low temperature) - electric field - magnetic field" multi - physical fields coupling for typical functional materials, and can carry out a parallel loading test in which at most the above seven kinds of loading manner coexist at the same time. By using the in-situ micro-nano indentation test module embedded in the instrument, the dynamic evolution of the indentation curve, hardness and elastic modulus of the material sample under complex load conditions can be accurately measured. In the case that the material sample is under a complex stress state and multi - physical field coupling condition , important data information relating to the material service property, reliability and service life, such as the physical property parameters, deformation damage, microstructure change and property evolution of the material during and after the action of complex load may be accurately and dynamically monitored by means of the in-situ monitoring platform. It can provide effective means and methods for material microcosmic mechanical property test under the conditions close to the service conditions.

**BACKGROUND OF THE DISCLOSURE**

The development and application of new materials and new technology is the basis of industrial development, and the continuous development of material science and technology also depends on the in-depth study on the various mechanical and physical properties of materials. The testing technology of mechanical properties of the material mainly relates to obtaining the elastic modulus, shear modulus and other macro mechanical parameters of the material. However, with the rapid development of materials science and technology, various kinds of new materials continue to emerge, and the test analysis of the specificity of these new materials has gradually become a research hotspot in the international academic field and engineering field. The traditional material mechanical property test method is difficult to fully reflect the physical characteristics of new materials, especially in the case that materials under the actual operating conditions often operates under the action of a composite load, in which case that various physical properties and mechanical properties of the material will not be assessed on the basis of the property under an individual load test.

With the present research level, material testing techniques for a single load has gradually matured, and theoretical method and apparatus for material testing for two or more composite loads have also been extensively studied. But these apparatuses are only those for loading the stress fields, and the actual operating conditions of the material cannot be truly reflected. The test principles of the apparatuses mostly relate to off-site testing, and the microstructure topography of the material sample cannot be dynamically observed in real time during the test. It is difficult to effectively combine the intrinsic mechanism of material microstructure change with the macroscopic mechanical properties of the material to analyze the property of the material comprehensively. Therefore, in the case that the existing apparatus cannot carry out the test of the material property which mostly relates to off-site process under the above composite load, the development of an in-situ testing equipment for material microcosmic mechanical property under a composite load mode based on mechanical - electric - thermal - magnetic multi - physical field coupling conditions, and the proposal of the corresponding test methods, have become a development trend of new material testing equipment.

CN 203 551 383 U, CN 204 374 017 U, CN 103 353 431 B and CN 103 499 483 A relate to testing equipment for material samples to be tested for mechanical, mechanical , electrical, thermal or magnetic properties.

**SUMMARY**

The invention is defined by the independent claims.

The present disclosure is achieved by the following technical features:

a material property in-situ test instrument under a composite load mode of mechanical - electric - thermal - magnetic coupling, including a composite load - multi-physical field loading test platform 1, an in-situ monitoring platform 2 and a vibration isolation base 3 for supporting the composite load - multi-physical field loading test platform 1 and the in-situ monitoring platform 2 to provide the composite load - multi-physical field loading test platform 1 and the in-situ monitoring platform 2 with a basic installation and positioning and to provide an effective vibration isolation treatment for the test process, wherein according to the test conditions, the composite load - multi-physical field loading test platform 1 applies mechanical loading of the stretching/compression, bending, torsion and low cycle fatigue load modes to the material sample to be tested, and at the same time, precisely detects load signal and deformation signal to realize mechanical property test of the material under the composite load mode; wherein according to the test conditions, the mechanical - electric - thermal - magnetic multi external field load is applied to the material sample to be tested, and precise measurement of the external field loading parameters and the corresponding physical property parameters of the material are achieved; wherein under the coupling action of the composite load - multi-physical field loading test platform 1, a complex load of the mechanical and external field coupling action in a condition close to the service condition is applied to the material sample to be tested, and at the same time, the basic physical property parameters of the material are accurately measured and quantitatively analyzed, and wherein the dynamic evolution of the basic mechanical parameters of the hardness and elastic modulus of the material under various external loads can be measured through a micro-nano indentation test experiment;

wherein the composite load - multi-physical field loading test platform 1 includes a stretching/compression loading module 11, a torsion loading module 12, a bending loading module 13, a low cycle fatigue loading module 14, a micro-nano indentation test module 15, a high temperature loading module 16, a low temperature loading module 17, a magnetic field loading module 18 and an electric field loading module 19, wherein a DC power supply and a circulating refrigeration pump, which are core devices of the low temperature loading module 17 and the electric field loading module 19, are external devices; wherein the stretching/compression loading module 11 is fixed to a table surface of a offset swinging table 2501, and the torsion loading module 12 includes two parts, i.e., a torsion loading active unit 1201 and a torsion loading fixing unit 1202 which are respectively attached to a torsion-end stretching carriage 1103 and a fatigue-end stretching carriage 1104 of the stretching/compression loading module 11; wherein the low cycle fatigue loading module 14 is mounted on the fatigue-end stretching carriage 1104 and is connected to tail of the torsion loading fixing unit 1202; wherein the bending loading module 13, the micro-nano indentation test module 15 and an infrared thermal imaging monitoring module 22 are fixed to a bending feed unit 2401, an indentation feed unit 2403, and an infrared thermal imager feed unit 2402 of a lateral loading observation module 24, respectively, and are mounted on a function switching unit 2404 together; wherein reciprocating motion of the function switching unit 2404 realizes positional selection and work station switching of the bending loading module 13, the micro-nano indentation test module 15, and the infrared thermal imaging monitoring module 22; wherein the linear motion of the infrared thermal imager feed unit 2402 adjusts the visible range of the infrared thermal imaging monitoring module 22, the linear motion of the bending feed unit 2401 drives a bending indenter 1302 to achieve a bending load loading, and the linear motion of the indentation feed unit 2403 drives an indentation indenter 1509 to initially position a press-in point; and wherein the high temperature loading module 16 is connected to the magnetic field loading module 18 by an adjustment carriage 1602 and an adjustment carriage guide rail 1805, and the magnetic field loading module 18 and the lateral loading observation module 24 are respectively fixed to the stretching/compression loading module 11 on two sides of a main axis thereof.

On the basis of achieving the stretching/compression loading test, the composite load - multi-physical field loading test platform (1) is integrated with other mechanical loading test modes, and can also construct a physical field environment of the high temperature/low temperature - electric field - magnetic field, wherein it is further possible to realize the analysis on microcosmic mechanical properties of the material by means of press-in detection means; at most, the composite load - multi-physical field coupling loading test of "stretching - fatigue - bending - torsion - high temperature field/low temperature field - electric field - magnetic field" or "compression - bending - torsion - high temperature field/low temperature field - electric field - magnetic field" can be achieved, to simulate abundant experimental environment, and to obtain abundant physical property parameters of the material, and a specific operating condition can also be simulated in which one or more of the functions can be selected to be coupled and loaded.

The composite load - multi-physical field loading test platform 1, the in-situ monitoring platform 2 and the vacuum chamber 4 are integrated to realize the composite load - multi-physical field coupling loading test and the in-situ monitoring in the vacuum environment; the vibration isolation base 3 is integrated in the vacuum chamber 4 to prevent the vibration generated during the operation of the vacuum pump from affecting the in-situ monitoring effect of the instrument; in the case that the vacuum chamber is provided, the composite load - multi-physical field loading test platform 1 is placed on the offset swinging support module 25 of which the offset swinging table 2501 is placed on the heavy load guide rail 2502, and the composite load - multi-physical field loading test platform 1, along with the offset swinging table 2501, is partially withdrawn from the vacuum chamber 4 at the end of the test to facilitate replacement of the material sample; at the same time, a carrier tool cart 6 is connected to the vibration isolation base 3 in the vacuum chamber 4 by docking the guide rails, and the composite load - multi-physical field loading test platform 1 is completely withdrawn out of the vacuum chamber 4 to facilitate the regulation and maintenance thereof.

The stretching/compression loading module 11 adopts a bidirectional stretching structure, and a stretching/compression servo motor 1101 drives a bidirectional screw 1102 to move a torsion-end stretching carriage 1103 and a fatigue-end stretching carriage 1104 so as to ensure the consistence of moving speed and stroke on two sides, applying the stretching/compression load, wherein the stretching/compression loading deformation is measured by a linear grating reading head I 1105 and a linear grating reading head II 1118.

The torsion loading module 12 includes two portions, i.e. a torsion loading active unit 1201 and a torsion loading fixing unit 1202, and is provided in such a manner that one end thereof can twist and the other end is fixed, wherein the torsion loading active unit 1201 is of a loading end, a torsion servo motor 120104 drives a torsion drive gear 120108 and a torsion driven gear 120109 to drive a active-end clamp body 120116 to realize the loading of the torque, wherein the torsion loading fixing unit 1202 is of a fixed end, the torque is transferred from a fixed-end clamp body 120204 and a connecting shaft 120209 to a stretching - torsion composite sensor 120210 to realize measurement of the stretching force and the torque; the active-end clamp body 120116 and the fixed-end clamp body 120204 are respectively installed with a circular grating reading head I 20117 and a circular grating reading head II 120202, and accurate measurement of twisting angle is achieved by measuring the angle difference read in the torsion measurement test;

A rotary joint 120106 of the torsion loading active unit 1201 includes a rotary joint stator 120106B and a rotary joint rotor 120106A on which an annular groove communicating with a flow opening in the rotary joint stator 120106B is established, so as to still maintain delivery of fluid when there is a relative rotation between the stator and the rotator; a flow path in the active-end clamp body 120116 is docked with a flow path in the rotary joint 120106 by a connecting flange 120107, achieving the introduction and circulation of the refrigerant fluid when the active-end clamp body 120116 is rotated due to the torsion loading; the low temperature loading module 17 pumps the refrigerant liquid to the flow paths established inside the active-end clamp body 120116 and the fixed-end clamp body 120204 by means of the internal refrigeration flow path inside the active-end clamp body 120116 and the fixed-end clamp body 120204 through the external low temperature refrigeration pump, and the material sample is refrigerated in a heat conduction manner, creating a low temperature test environment for the material sample.

An inner frame of a fatigue loading module flexible hinge 1402 of the low cycle fatigue loading module 14 is fixed to a fatigue loading module bottom base 1401, and an outer frame is connected to a connecting plate 120211; a fatigue loading module piezoelectric stack 1403 drives the fixed-end clamp body 120204 by means of the fatigue loading module flexible hinge 1402, the connecting plate 120211, and a stretching - torsion composite sensor 120210 to generate a reciprocating slight displacement of high frequency, achieving the fatigue loading on the stretching material sample 51 under action of a pre-stretching load; under a large stretching load, unloading of the large stretching load is achieved by tightening the screws to fasten an unloading plate 120212 to the connecting plate 120211 and the fatigue-end stretching carriage 1104, preventing the fatigue loading module piezoelectric stack 1403 from being damaged.

The micro-nano indentation test module 15 achieves initial indentation feed by linear motion of the indentation feed unit 2403, the indentation test module piezoelectric stack 1505 drives the indentation indenter 1509 by an indentation flexible hinge 1502 to effect an accurate feed. Press-in force during press-in process is acquired by an press-in force sensor 1508, and press-in depth of the indentation indenter 1509 is monitored by a capacitive slight displacement sensor 1506.

The high temperature loading module 16 includes a halogen heating lamp 1601, an adjustment carriage 1602, a halogen lamp mounting plate 1603, the halogen heating lamp 1601 is connected to the halogen lamp mounting plate 1603 by screws and mounted on the adjustment carriage 1602, and the loading of high temperature field is achieved by the halogen heating lamp 1601 irradiating the material sample with a focused light beam.

The magnetic field loading module 18 includes a lower magnetic yoke 1801, a coil 1802, an upper magnetic yoke 1803, magnetic pole heads 1804, an adjustment carriage guide rail 1805, the loading of the magnetic field is realized by a controllable electromagnet consisting of the lower magnetic yoke 1801, the coil 1802, the upper magnetic yoke 1803, and the magnetic pole heads 1804. The two magnetic pole heads 1804 are arranged up and down and are fixed to the lower magnetic yoke 1801 and the upper magnetic yoke 1803, respectively, the material sample is placed between the two magnetic pole heads 1804, and the control of the magnetic field intensity is achieved by adjusting the current loaded on the coil 1802; when a high temperature field function is not needed, the halogen heating lamp 1601 can be removed by means of the adjustment carriage 1602 to prevent the optical path of the in-situ monitoring module from being blocked; the electric field loading module 19 is externally connected to a high voltage direct current power supply, the conductive silver glue is used to connect two wires to two opposite surfaces of the material sample, respectively, and a DC high voltage electric field is applied to two ends of the wire to realize loading of the electric field; the placement of the entire test instrument in the vacuum chamber 4 helps to reduce the breakdown voltage between the two electrodes to increase the electric field intensity in the electric field loading test.

The in-situ monitoring platform 2 is used to dynamically monitor the deformation damage, microstructure change and property evolution of the material sample under the action of the complex mechanical load and multi-physical field load; through the precise adjustment of the position and posture of the various monitoring modules, the real-time dynamical in-situ monitoring of the microcosmic deformation, damage mechanism, microstructure change and property evolution of the material samples in the complex load condition can be realized; the in-situ monitoring platform 2 includes an optical microscopic imaging monitoring module 21, an infrared thermal imaging monitoring module 22, a microscopic Raman spectrum monitoring module 23, a lateral loading observation module 24 and a offset swinging support module

25; the optical microscopic imaging monitoring module 21 and the microscopic Raman spectrum monitoring module 23 are arranged on two sides of the composite load - multi-physical field loading test platform 1 and mounted on the vibration isolation base 3; the offset swinging support module 25 is mounted on the vibration isolation base 3, providing abundant observation positions for each of the in-situ observation modules while carrying the composite load - multi-physical field loading test platform 1. The infrared thermal imaging monitoring module 22 is mounted on the lateral loading observation module 24 and the lateral loading observation module 24 is mounted on the composite load - multi-physical field loading test platform 1.

Position adjustment in three, X, Y and Z, directions can be realized both in the optical microscopic imaging monitoring module 21 and the microscopic Raman spectrum monitoring module 23, and transformation of the display view field and focusing of the imaging instruments are achieved by a X-axis moving unit I 2101 and a X-axis moving unit II 2301, a Y-axis moving unit I 2102 and a Y-axis moving unit II 2302, as well as a Z-axis moving unit I 2104 and a Z-axis moving unit II 2304; the initial monitoring angle and the initial monitoring position of the microscopic Raman spectrometer 2315 is adjusted by adjusting the rotary bracket 2305 and the distance adjustment hand wheel 2313, achieving a more extensive monitoring range; the microscopic Raman spectrometer 2315 is in the form of a built-in CCD of which the rear is integrated with a Raman spectrometer through a standard C interface; a local tiny area is selected from the visible range according to the microscopic image and the texture component analysis of the tiny area by the Raman spectrometer is realized; the microstructure monitoring and the texture component change monitoring of the material sample in the composite load - multi-physical field coupling test is respectively realized by the optical microscopic imaging monitoring module 21 and the microscopic Raman spectrum monitoring module 23; and the infrared thermal imaging monitoring module 22 monitors the temperature distribution of the material sample under the temperature field in real time.

Another object of the present disclosure is to provide a material property in-situ test method under a composite load mode of mechanical - electric - thermal - magnetic coupling; with respect to a material microcosmic property in-situ test method under a mechanical - electric - thermal - magnetic multi-physical field coupling based on a stretching test, including the following steps: fixing the stretching material sample 51 to the active-end clamp body 120116 and the fixed-end clamp body 120204 by the active-end stretching clamp platen 120115 and the fixed-end stretching clamp platen 120205, and causing the stretching/compression loading module 11 to drive the torsion-end stretching carriage 1103 and the fatigue-end stretching carriage 1104 to reversely move so as to achieve the stretching loading on the stretching material sample 51; wherein the torsion loading on the stretching material sample 51 is achieved by the torsion loading module 12; the stretching strain and the torsion strain of the stretching material sample 51 are measured by the linear grating reading head I 1105 and the circular grating reading head I 120117, respectively, and the stretching stress and the torsion stress are measured by the stretching and torsion composite sensor 120210; the low cycle fatigue loading module 14 can apply a low cycle fatigue load to the stretching material sample 51 under a stretching load; by driving the bending loading module 13 to the working position by means of the lateral loading observation module 24, the bending load is applied to the stretching material sample 51 and the bending force is measured by the pressure sensor 1303; the electric field is applied to the stretching material sample 51 by the electric field loading module 19 while the composite mechanical load is applied, the magnetic field is applied to the stretching material sample 51 by the magnetic field loading module 18, the intensity of the applied electric field and the intensity of the applied magnetic field are controlled by the relevant instruments, and the electric hysteresis loop and the magnetic hysteresis loop are measured during the test; the high temperature is applied to the stretching material sample 51 by the high temperature loading module 16, and then the infrared thermal imaging monitoring module 22 is moved to the working position by the lateral loading observation module 24 to measure the temperature field information of the stretching material sample 51; the low temperature loading module 17 can further apply a low temperature to the stretching material sample 51; during operation, the in situ observation to the deformation damage and the failure form of the stretching material sample 51 are carried out by the optical microscopic imaging monitoring module 21; at any time during the test, the micro-nano indentation test module 15 can be switched to the working position by the lateral loading observation module 24, the surface of the test piece is subjected to a micro-nano indentation test, and the initial indentation feed is performed by the linear motion of the indentation feed unit 2403; the indentation test module piezoelectric stack 1505 drives the indentation indenter 1509 through the indentation flexible hinge 1502 and the press-in force sensor 1508 to achieve a precise feed; a micro-nano indentation curve is drawn with the information about the press-in force and the press-in amount that are acquired by the press-in force sensor 1508 and the capacitive slight displacement sensor 1506; in such a process, the composite load - multi-physical field loading test platform 1 can be adjusted within the observation range of the microscopic Raman spectrum monitoring module 23 by the offset swinging support module 25, the in-situ test in the press-in process is performed and at the same time the Raman spectrum information of the local tiny area is obtained.

## BRIEF DESCRIPTION OF THE DRAWINGS

The drawings described herein are intended to provide a further understanding of the disclosure and constitute a part of this application, and illustrative examples and the description thereof in the disclosure are intended to explain the disclosure and are not to be construed as an inappropriate limitation to the disclosure.

Figure 1 is a schematic view of the entire machine of the present disclosure;
Figure 2 is a schematic view of a composite load - multi-physical field loading test platform of the present disclosure;
Figure 3 is an assembly view of a stretching/compression loading module of the present disclosure;
Figure 4 is an assembly view of a torsion loading active unit of the present disclosure;
Figure 5 is an assembly view of a torsion loading fixing unit of the present disclosure;
Figure 6 is an assembly view of a lateral loading observation module of the present disclosure;
Figure 7 is a schematic view of the fine adjustment unit of the present disclosure;
Figure 8 is a schematic view of a refrigeration flow path of the present disclosure;
Figure 9 is a schematic view showing the clamping of a stretching material sample of the present disclosure;
Figure 10 is a schematic view showing the clamping of a compression material sample of the present disclosure;
Figure 11 is an assembly view of a high temperature loading module and a magnetic field loading module of the present disclosure;
Figure 12 is an assembly view of an offset swinging support module of the present disclosure;
Figure 13 is an assembly view of an optical microscopic imaging monitoring module of the present disclosure;
Figure 14 is an assembly view of a microscopic Raman spectrum monitoring module of the present disclosure;
Figure 15 is a schematic view of a vacuum chamber arrangement and a composite load - multi-physical field loading test platform of the present disclosure;
Figure 16 and Figure 17 are schematic views of the operation of an offset swinging table of the present disclosure;
Figure 18 is a principle diagram of a composite load mode mechanical loading of the present disclosure; and
Figure 19 is a principle diagram of a multi-physical field loading of the present disclosure.

Numeral signs:

| 1 | composite load - multi-physical field loading test platform; |
|---|---|
| 2 | in-situ monitoring platform; |
| 3 | vibration isolation base; |
| 4 | vacuum chamber; |
| 51 | stretching material sample; |
| 52 | compression material sample; |
| 6 | carrier tool cart; |
| 11 | stretching/compression loading module; |
| 12 | torsion loading module; |
| 13 | bending loading module; |
| 14 | low cycle fatigue loading module; |
| 15 | micro-nano indentation test module; |
| 16 | high temperature loading module; |
| 17 | low temperature loading module; |
| 18 | magnetic field loading module; |
| 19 | electric field loading module; |
| 21 | optical microscopic imaging monitoring module; |
| 22 | infrared thermal imaging monitoring module; |
| 23 | microscopic Raman spectrum monitoring module; |
| 24 | lateral loading observation module; |
| 25 | offset swinging support module; |
| 1101 | stretching/compression servo motor; |
| 1102 | bidirectional screw; |
| 1103 | torsion-end stretching carriage; |
| 1104 | fatigue-end stretching carriage; |
| 1105 | linear grating reading head I; |
| 1106 | linear grating ruler I; |
| 1107 | stretching platform slider; |
| 1108 | stretching motor support base; |
| 1109 | coupling; |
| 1110 | screw support base assembly; |

| 1111 | stretching guide rail; |
|---|---|
| 1112 | magnetic field loading module positioning key; |
| 1113 | linear grating reading head bracket; |
| 1114 | grating ruler fixing sheet; |
| 1115 | base plate; |
| 1116 | limit switch bracket; |
| 1117 | limit switch; |
| 1118 | linear grating reading head II; |
| 1119 | linear grating ruler II; |
| 1120 | nut I; |
| 1121 | nut seat I; |
| 1122 | nut II; |
| 1123 | nut seat II; |
| 1201 | torsion loading active unit; |
| 1202 | torsion loading fixing unit; |
| 120101 | torsion bearing frame; |
| 120102 | transmission shaft; |
| 120103 | torsion motor support base; |
| 120104 | torsion servo motor; |
| 120105 | rotary joint support base; |
| 120106 | rotary joint; |
| 120107 | connecting flange; |
| 120108 | torsion drive gear; |
| 120109 | torsion driven gear; |
| 120110 | angular contact bearing end cover; |
| 120111 | gasket I; |
| 120112 | angular contact bearing seat; |
| 120113 | angular contact ball bearing; |
| 120114 | circular grating ruler I; |
| 120115 | active-end stretching clamp platen; |
| 120116 | active-end clamp body; |
| 120117 | circular grating reading head I; |
| 120118 | active-end compression clamp head; |
| 120201 | cylindrical roller bearing seat; |
| 120202 | circular grating reading head II; |
| 120203 | circular grating ruler II; |
| 120204 | fixed-end clamp body; |
| 120205 | fixed-end stretching clamp platen; |
| 120206 | cylindrical roller bearing; |
| 120207 | gasket II; |
| 120208 | cylindrical roller bearing end cover; |
| 120209 | connecting shaft; |
| 120210 | stretching - torsion composite sensor; |
| 120211 | connecting plate; |
| 120212 | unloading plate; |
| 120213 | fixed-end compression clamp head; |
| 1301 | bending loading module support base; |
| 1302 | bending indenter; |
| 1303 | pressure sensor; |
| 1304 | support shaft; |
| 1401 | fatigue loading module bottom base; |
| 1402 | fatigue loading module flexible hinge; |
| 1403 | fatigue loading module piezoelectric stack; |
| 1404 | fatigue module slider; |
| 1405 | end face fixing plate; |
| 1406 | fatigue module guide rail, |
| 1501 | wedged block; |
| 1502 | indentation flexible hinge; |

1503      indentation test module support base;
1504      fine adjustment unit;
1505      indentation test module piezoelectric stack;
1506      capacitive slight displacement sensor;
1507      stopping sheet;
1508      press-in force sensor;
1509      indentation indenter;
150401   movable plate;
150402   displacement sensor bracket;
150403   displacement sensor platen;
150404   fixing plate;
150405   handle;
1601      halogen heating lamp;
1602      adjustment carriage;
1603      halogen lamp mounting plate;
1801      lower magnetic yoke;
1802      coil;
1803      upper magnetic yoke;
1804      magnetic pole head;
1805      adjustment carriage guide rail;
2101      X-axis moving unit I;
2102      Y-axis moving unit I;
2103      support plate;
2104      Z-axis moving unit I;
2105      optical microscope bracket;
2106      optical microscope;
2107      X-axis support unit I;
2301      X-axis moving unit II;
2302      Y-axis moving unit II;
2303      support plate II;
2304      Z-axis moving unit II;
2305      rotary bracket;
2306      angle adjustment base;
2307      angle adjustment nut;
2308      angle adjustment hand wheel;
2309      angle adjustment screw;
2310      guide post;
2311      rack;
2312      gripper;
2313      distance adjustment hand wheel;
2314      microscopic Raman connecting plate;
2315      microscopic Raman spectrometer;
2316      X-axis support unit II;
2401      bending feed unit;
2402      infrared thermal imaging feed unit;
2403      indentation feed unit;
2404      function switching unit;
2501      offset swinging table;
2502      heavy load guide rail;
2503      positioning section bar;
2504      positioning key;
2505      offset swinging servo motor.

## DETAILED DESCRIPTION OF EMBODIMENTS

The details of the present disclosure and its specific embodiments will be further described with reference to the accompanying drawings.

An object of the present disclosure is to provide a material property in-situ test instrument and method under a composite load mode of mechanical - electric - thermal - magnetic coupling to solve the problem that the material property in-situ test under a mechanical - electric - thermal - magnetic multi - physical field coupling cannot be realized in the existing apparatus. On the basis of realization of the stretching/compression loading, the disclosure can realize the integration of other mechanical loading forms and can also construct the multi - physical field coupling condition of the high temperature field/low temperature field - electric field - magnetic field. The dynamic evolution of the parameters such as indentation curve, hardness and elastic modulus of the material sample under these complex load conditions can be accurately measured with the in-situ micro-nano indentation test module embedded in the instrument. The instrument can achieve any combination of stretching/compression, bending, torsion, low cycle fatigue, temperature field, electric field and magnetic field, and at most can realize the parallel loading test of the above seven kinds of load modes at the same time to provides effective means and methods for the microcosmic mechanical property test in a condition close to the service condition. At the same time, important data information relating to the material service property, reliability and service life, such as the physical property parameters, deformation damage, microstructure change and property evolution of the material during and after the action of complex load, can be accurately and dynamically monitored by means of the optical microscopic imaging monitoring module, microscopic Raman monitoring module and other types of in-situ monitoring module that are embedded in the instrument. In the present disclosure, the entire machine is integrated with a vacuum chamber to simulate the more abundant experimental environments, such as low pressure environment, vacuum environment, inert gas environment and so on. The loading mode and the experimental conditions according to the disclosure are closer to the actual service situation of the material and the more abundant material property parameters can be obtained so as to provide an effective test method for studying the mechanical properties, physical properties, microstructure topography and material failure mechanism of the material.

The disclosure has the following advantages:

1. The instrument according to the present disclosure can realize the individual loading of four kinds of loads of "stretching/compression - torsion - bending - low cycle fatigue", and can also construct the physical field environment of high temperature/low temperature - electric field - magnetic field. At most composite load - multi-physical field coupling loading test under "stretching - low cycle fatigue - bending - torsion - high temperature field (low temperature field) - electric field - magnetic field" or "compression - bending - torsion - high temperature field (low temperature field) - electric field - magnetic field" can be realized, abundant test environment can be simulated, and abundant material physical property parameters can be obtained. A specific operating condition can also be simulated and one or more of the functions, such as stretching - torsion - low temperature, stretching - fatigue - high temperature, compression - electric field, can be chosen to be coupled and loaded.

2. The instrument according to the present disclosure utilizes an in-situ observation platform consisting of the optical microscopic imaging monitoring module, the infrared thermal imaging monitoring module and the microscopic Raman spectrum monitoring module and can dynamically in situ monitor such as the deformation damage, microstructure change and property evolution of the material sample under the action of the complex mechanical load and multi-physical field load.

3. The instrument according to the present disclosure can be integrated with a vacuum chamber to provide a test environment such as low pressure, vacuum, inert gas and the like for the material sample to be tested in order to carry out the composite load - multi-physical field coupling loading test of the material sample in the above environment and to provide a more abundant test method for the study on the microstructure topography and failure mechanism of the material in a condition close to the service condition. The electronic control part of the instrument can be integrated and arranged in the lower part of the vibration isolation base, and can be integrated with a carrier tool cart to make the instrument structure more compact, easy to operate and complete in function.

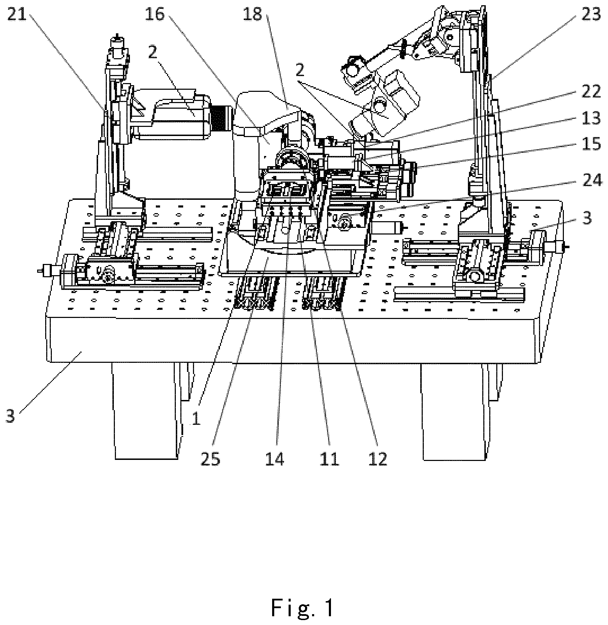

Referring to Figures 1 to 19, a material property in-situ test instrument under a composite load mode of mechanical - electric - thermal - magnetic coupling, including a composite load - multi-physical field loading test platform 1, an in-situ monitoring platform 2 and a vibration isolation base 3 for supporting the composite load - multi-physical field loading test platform 1 and the in-situ monitoring platform 2 to provide them with a basic installation and positioning and to provide an effective vibration isolation treatment for the test process; the vibration isolation base 3 provides the test instrument with an entire machine support and a stable vibration-free test environment; if a vacuum environment is required to be created, the core part, such as the composite load - multi-physical field loading test platform 1, the in-situ monitoring platform 2, can be integrated with the vacuum chamber 4, and the composite load - multi-physical field coupling loading test and the in-situ monitoring in the vacuum environment can be realized; the vibration isolation base 3 is integrated in the vacuum chamber 4 to prevent the vibration generated during the operation of the vacuum pump from affecting the in-situ monitoring effect of the instrument. The offset swinging support module 25 is arranged in the center of a surface of the vibration isolation base, and the composite load - multi-physical field loading test platform 1 is fixed to the center of the table surface of the offset swinging table 2501 and ensures that the stretching/compression axis is coaxial with the rotation axis of the offset swinging table. The mechanical loading platform is based on the stretching/compression load module 11.

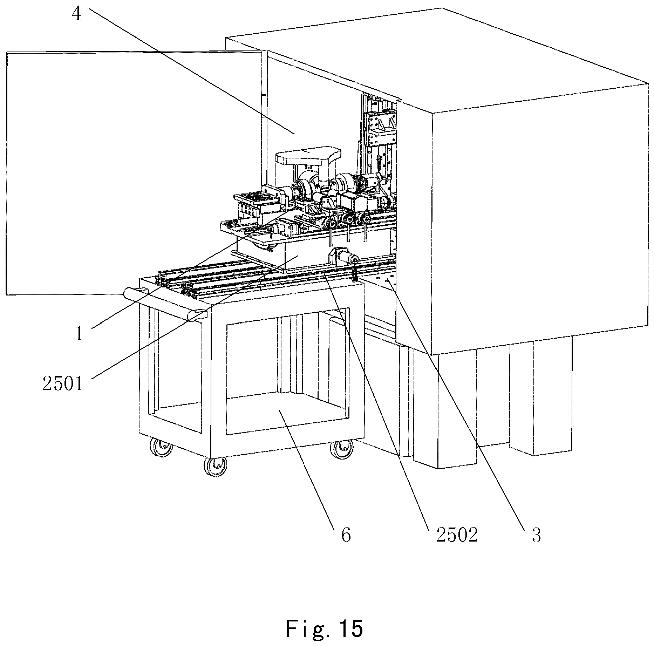

As shown in Fig. 15, the material microcosmic property in-situ test under the composite load mode of mechanical - electric - thermal - magnetic multi-physical field coupling in the vacuum environment is realized by using the vacuum chamber 4. The loading test platform is placed on the offset swinging support module 25 in which the offset swinging table 2501 is placed on the heavy load guide rail 2502, and the loading test platform, along with the offset swinging table 2501, is partially withdrawn from the vacuum chamber 4 at the end of the test to facilitate replacement of the material sample. At the same time, a carrier tool cart 6 is connected to the vibration isolation base 3 in the vacuum chamber 4 by docking the guide rails, and the loading test platform is completely withdrawn out of the vacuum chamber 4 to facilitate the regulation and maintenance thereof.

On the basis of realization of the stretching/compression loading, the disclosure can realize the integration of other mechanical loading forms and can also construct the multi - physical field coupling condition of the high temperature field/low temperature field - electric field - magnetic field. The dynamic evolution of the parameters such as indentation curve, hardness and elastic modulus of the material sample under these complex load conditions can be accurately measured with the in-situ micro-nano indentation test module 15 embedded in the instrument. The instrument can achieve any combination of stretching/compression, bending, torsion, low cycle fatigue, temperature field, electric field and magnetic field, and can realize the parallel loading test of the above seven kinds of loading modes at the same time to provides effective means and methods for the material microcosmic mechanical property test in a condition close to the service condition.

The offset swinging table 2501 of the offset swinging support module 25 is placed on a heavy load guide rail 2502, and the composite load - multi-physical field loading test platform 1, along with the offset swinging table 2501, is partially withdrawn from the vacuum chamber 4 at the end of the test to facilitate replacement of the material sample; at the same time, a carrier tool cart 6 is connected to the vibration isolation base 3 in the vacuum chamber 4 by docking the guide rails, and the composite load - multi-physical field loading test platform 1 is completely withdrawn out of the vacuum chamber 4 to facilitate the regulation and maintenance thereof.

According to the test conditions, the composite load - multi-physical field loading test platform 1 applies mechanical loading of multi load modes, such as the stretching/compression, bending, torsion and low cycle fatigue, to the material sample to be tested, and at the same time, precisely detects load signal and deformation signal to realize mechanical property test of the material under the composite load mode; according to the test conditions, the mechanical - electric - thermal - magnetic multi external field load is applied to the material sample to be tested, and precise measurement of the external field loading parameters and the corresponding physical property parameters of the material are achieved; wherein under the coupling action of the composite load - multi-physical field loading test platform 1, a complex load of the mechanical and external field coupling action in a condition close to the service condition is applied to the material sample to be tested, and at the same time, the basic physical property parameters of the material are accurately measured and quantitatively analyzed; and wherein the dynamic evolution of the basic mechanical parameters, such as the hardness and elastic modulus, of the material under various external loads can be measured through a micro-nano indentation test experiment.

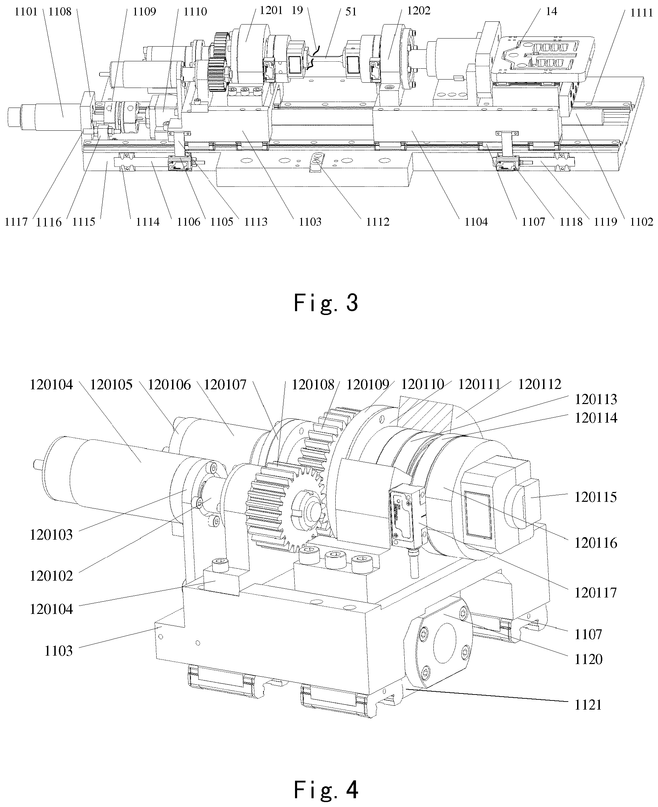

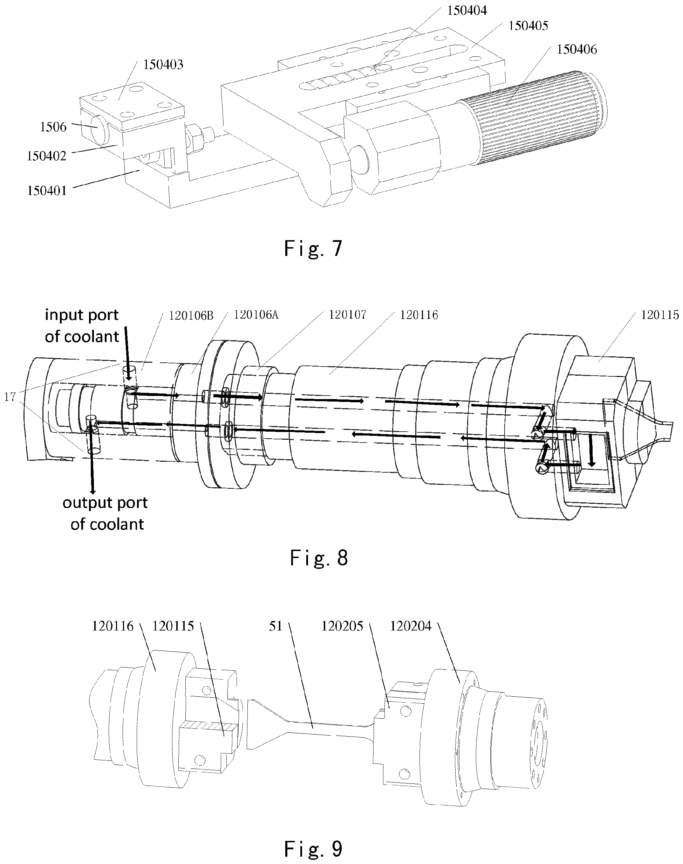

The composite load - multi-physical field loading test platform 1 includes a stretching/compression loading module 11, a torsion loading module 12, a bending loading module 13, a low cycle fatigue loading module 14, a micro-nano indentation test module 15, a high temperature loading module 16 , a low temperature loading module 17, a magnetic field loading module 18 and an electric field loading module 19, wherein a DC power supply and a circulating refrigeration pump, which are core devices of the low temperature loading module 17 and the electric field loading module 19, are external devices; the reference numerals in Figures 3 and 8 respectively represent wires introduced from the high voltage power supply and flow path introducing the low temperature fluid. In practical operation, the above modules can be selected and provided according to the actual requirements.

The stretching/compression loading module 11 is fixed to a table surface of a offset swinging table 2501, and the torsion loading module 12 includes two parts, i.e., a torsion loading active unit 1201 and a torsion loading fixing unit 1202 which are respectively attached to a torsion-end stretching carriage 1103 and a fatigue-end stretching carriage 1104 of the stretching/compression loading module 11; wherein the low cycle fatigue loading module 14 is mounted on the fatigue-end stretching carriage 1104 and is connected to tail of the torsion loading fixing unit 1202; wherein the bending loading module 13, the micro-nano indentation test module 15 and an infrared thermal imaging monitoring module 22 are respectively fixed to a bending feed unit 2401, an indentation feed unit 2403, and an infrared thermal imager feed unit 2402 of a lateral loading observation module 24 by screws in a same manner, and are mounted on a function switching unit 2404 together; wherein reciprocating motion of the function switching unit 2404 realizes positional selection and work station switching of the bending loading, the indentation loading, and the infrared thermal imaging operations; wherein the linear motion of the infrared thermal imager feed unit 2402 adjusts the visible range of the infrared thermal imaging monitoring module 22, the linear motion of the bending feed unit 2401 drives a bending indenter 1302 to apply bending load, and the linear motion of the indentation feed unit 2403 drives an indentation indenter 1509 to initially position a press-in point; and wherein the high temperature loading module 16 is connected to the magnetic field loading module 18 by an adjustment carriage 1602 and an adjustment carriage guide rail 1805, and the magnetic field loading module 18 and the lateral loading observation module 24 are respectively fixed to the stretching/compression loading module 11 on two sides of a main axis thereof.

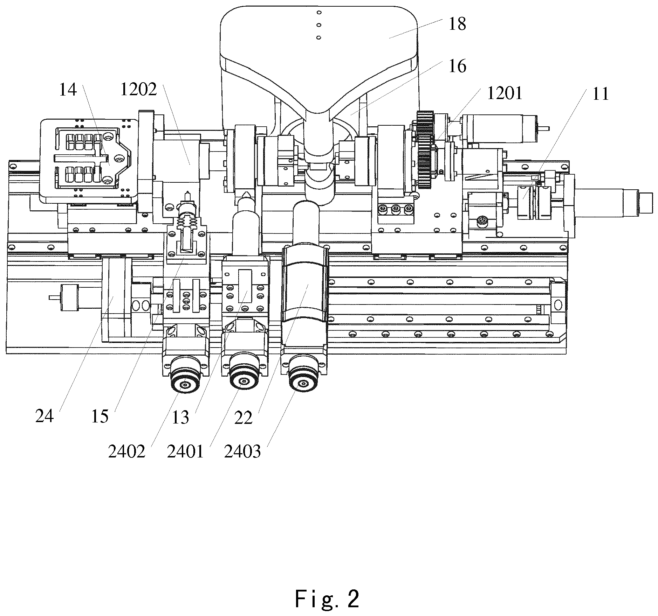

As shown in Figures 2 to 5, the stretching/compression loading module 11 of the present disclosure adopts a bidirectional stretching structure, and a stretching/compression servo motor 1101 drives a bidirectional screw 1102 to drive a torsion-end stretching carriage 1103 and a fatigue-end stretching carriage 1104 so as to ensure the consistence of moving speed and stroke on two sides, applying the stretching/compression load, wherein the stretching/compression loading deformation is measured by a linear grating reading head I 1105 and a linear grating reading head II 1118. The stretching/compression loading module 11 includes the stretching/compression servo motor 1101, and the bidirectional screw 1102, the torsion-end stretching carriage 1103, a stretching motor support base 1108, a coupling 1109, a screw support base assembly 1110, a stretching guide rail 1111, a stretching platform slider 1107, a fatigue-end stretching carriage 1104, a magnetic field loading module positioning key 1112, a linear grating reading head bracket 1113, a linear grating reading head I 1105, a linear grating reading head II 1118, a linear grating ruler I 1106, a linear grating ruler II 1119, a grating ruler fixing sheet 1114, a base plate 1115, a limit switch bracket 1116, a limit switch 1117, nuts I 1120, nuts II 1122, a nut seat I 1121, a nut seat II 1123. The base plate 1115 is a fixed portion of the stretching/compression loading module 11. The stretching/compression servo motor 1101 is fixed to the base plate 1115 by the stretching motor support base 1108 and the stretching/compression servo motor 1101 is connected to the bidirectional screw 1102 via a coupling 1109. The bidirectional screw 1102 is positioned on the base plate 1115 by means of a screw support base assembly 1110. The bidirectional screw 1102 and the nuts I 1120 as well as the nuts II 1122 constitute two sets of nut pairs. The nuts I 1120 and the nuts II 1122 are fixed to the fatigue-end stretching carriage 1104 and the torsion-end stretching carriage 1103 through the nut seat I 1121 and the nut seat II 1123, respectively. The fatigue-end stretching carriage 1104, and the torsion-end stretching carriage 1103 are mounted on the stretching guide rail 1111 by a stretching platform slider 1107. The linear grating reading head I 1105 and the linear grating reading head II 1118 are mounted on the fatigue-end stretching carriage 1104 and the torsion-end stretching carriage 1103 through the linear grating reading head bracket 1113, respectively. The linear grating ruler I 1106 and the linear grating ruler II 1119 are mounted on the base plate 1115 through a grating ruler fixing sheet 1114. The limit switch 1117 is mounted on the base plate 1115 through a limit switch bracket 1116. The magnetic field loading module positioning key 1112 is mounted on the base plate 1115.

In operation, the stretching/compression servo motor 1101 drives the bidirectional screw 1102 to rotate to move the nuts I 1120 and the nuts II 1122 at a same speed but in different directions, and drives the fatigue-end stretching carriage 1104 and the torsion-end stretching carriage 1103 to move at a same speed but in different directions. The relative motion between the linear grating reading head I 1105 and the linear grating ruler I 1106 as well as that between the linear grating reading head II 1118 and the linear grating ruler II 1119 are utilized to obtain the stretching/compression deformation amount of the material sample. The limit switch 1117 prevents the stretching platform slider 1107 from slipping out of the stretching guide rail 1111.

As shown in Figs. 2, 4 and 5, the torsion loading module 12 according to the present disclosure includes two portions, i.e., a torsion loading active unit 1201 and a torsion loading fixing unit 1202, and is provided in such a manner that one end thereof can twist and the other end is fixed, wherein the torsion loading active unit 1201 is of a loading end, a torsion servo motor 120104 drives a torsion drive gear 120108 and a torsion driven gear 120109 to drive a active-end clamp body 120116 to realize the loading of the torque; wherein the torsion loading fixing unit 1202 is of a fixed end, the torque is transferred from a fixed-end clamp body 120204 and a connecting shaft 120209 to a stretching - torsion composite sensor 120210 to realize measurement of the stretching force and the torque; the active-end clamp body 120116 and the fixed-end clamp body 120204 are respectively installed with a circular grating reading head I 20117 and a circular grating reading head II 120202, and accurate measurement of twisting angle is achieved by measuring the angle difference read in the torsion measurement test.

The torsion loading active unit 1201 includes a torsion bearing frame 120101, a transmission shaft 120102, a torsion motor support base 120103, a torsion servo motor 120104, a rotary joint support base 120105, a rotary joint 120106, a connecting flange 120107, a torsion drive gear 120108, a torsion driven gear 120109, an angular contact bearing end cover 120110, a gasket I 120111, an angular contact bearing seat 120112, an angular contact ball bearing 120113, a circular grating ruler I 120114, an active-end stretching clamp platen 120115, an active-end clamp body 120116, a circular grating reading head 120117, an active-end compression clamp head 120118. The motor shaft of the torsion servo motor 120104 is connected to the transmission shaft 120102 by a key, and the torsion drive gear 120108 is connected to the transmission shaft 120102, and the torsion driven gear 120109 is connected to the active-end clamp body 120116 by a key. The torsion servo motor 120104 is fixed to the torsion-end stretching carriage 1103 by the torsion motor support base 120103. The torsion bearing frame 120101 is fixed to the torsion-end stretching carriage 1103. The transmission shaft 120102 is mounted on the torsion bearing frame 120101. The rotary joint 120106 includes a rotary joint stator 120106B and a rotary joint rotor 120106A. The rotary joint stator 120106B is connected to the rotary joint support base 120105 and the rotary joint rotor 120106A is connected to the active-end clamp body 120116 by means of the connecting flange 120107. The active-end clamp body 120116 is mounted on the angular contact bearing seat 120112 by means of one pair of angular contact ball bearings 120113 arranged back to back, the angular contact bearing end cover 120110 and the gasket I 120111 are mounted on the angular contact bearing seat 120112, the angular contact ball bearings 120113 is tightly pressed by the angular contact bearing end cover 120110, and the angular contact bearing seat 120112 is attached to the torsion-end stretching carriage 1103 by screws. The circular grating ruler I 120114 is mounted on the active-end clamp body 120116 and the circular grating reading head 120117 is mounted on the angular contact bearing seat 120112. The active-end stretching clamp platen 120115 and the active-end compression clamp head 120118 are mounted to the active-end clamp body 120116 for the stretching/compression test so as to clamp the stretching material sample 51/the compression material sample 52. In operation, the torsion servo motor 120104 transmits the torque from the transmission shaft 120102, the torsion drive gear 120108 and the torsion driven gear 120109 to the active-end clamp body 120116, and drives the material sample to twist.

The torsion loading fixing unit 1202 includes a circular grating ruler II 120203, a circular grating reading head II 120202, a fixed-end clamp body 120204, a fixed-end stretching clamp platen 120205, a cylindrical roller bearing 120206, a gasket II 120207, a cylindrical roller bearing end cover 120208, a connecting shaft 120209, a stretching - torsion composite sensor 120210, a connecting plate 120211, an unloading plate 120212, a cylindrical roller bearing seat 120201, and a fixed-end compression clamp head 120213. The fixed-end clamp body 120204 is mounted on the cylindrical roller bearing seat 120201 by the cylindrical roller bearing 120206, the connecting shaft 120209 is connected to the fixed-end clamp body 120204 and the stretching - torsion composite sensor 120210 at two ends thereof by screws, respectively, and the stretching - torsion composite sensor 120210 is connected to the connecting plate 120211 by screws. The cylindrical roller bearing seat 120201 and the unloading plate 120212 are connected to the fatigue-end stretching carriage 1104. The cylindrical roller bearing end cover 120208 and the gasket II 120207 are mounted on the cylindrical roller bearing seat 120201. The circular grating ruler II 120203 is mounted on the fixed-end clamp body 120204 and the circular grating reading head II 120202 is mounted on the cylindrical roller bearing seat 120201. The fixed-end stretching clamp platen 120205 and the fixed-end compression clamp head 120213 are mounted to the fixed-end clamp body 120204 for the stretching/compression test so as to clamp the stretching material sample 51/compression material sample 52.

In twisting, the stretching/compression force and the torque are transmitted to the stretching and torsion composite sensor 120210 by the fixed-end clamp body 120204 and the connecting shaft 120209 to realize the measurement of the stretching force/compression force and the torque load. The active-end clamp body 120116 and the fixed-end clamp body 120204 are respectively installed with a circular grating ruler I 120114 and a circular grating ruler II 120203. The accurate measurement of twisting angle is achieved by measuring the angle difference read in the torsion measurement test with the circular grating reading head I 120117 and the circular grating reading head II 120202. Under a large stretching load, the large stretching load is removed by tightening the screws to fasten an unloading plate 120212 to the connecting plate 120211 and the fatigue-end stretching carriage 1104, preventing the fatigue loading module piezoelectric stack 1403 from being damaged.

With respect to the clamping manner, according to the characteristic that the stretching material sample 51 used in the stretching test is plate-like in shape, the stretching material sample 51 is tightly caught by the slopes on the fixed-end clamp body 120204 and the active-end clamp body 120116. The active-end stretching clamp platen 120115 and the fixed-end stretching clamp platen 120205 are respectively mounted to the clamp bodies on two sides to realize the clamping of the stretching material sample 51. According to the characteristic that the compression material sample 52 used in the compression test is cubic in shape, the active-end compression clamp head 120118 and the fixed-end compression clamp head 120213 are respectively mounted to the clamp bodies on two sides. A square groove is provided in the active-end compression clamp head 120118 and the fixed-end compression clamp head 120213 such that the compression material sample 52 can be caught in the groove to realize the clamping of the compression material sample 52 during the compression, bending and torsion loading.

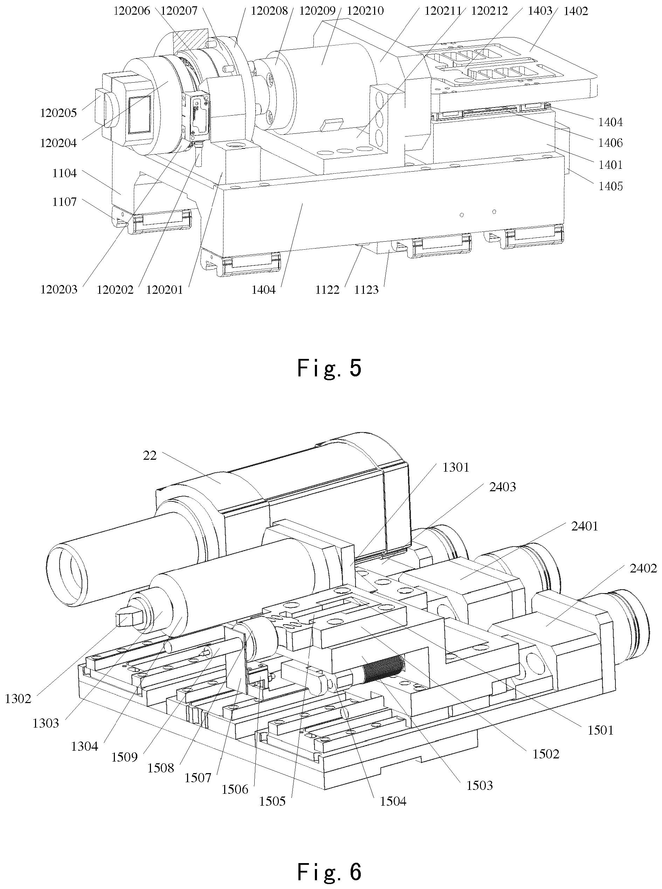

As shown in Figures 2 and 5, the low cycle fatigue loading module 14 of the present disclosure includes a fatigue loading module flexible hinge 1402, a fatigue loading module piezoelectric stack 1403, a fatigue module slider 1404, a fatigue module guide rail 1406, a fatigue loading module bottom base 1401 and an end face fixing plate 1405. The fatigue loading module flexible hinge 1402 includes a fixed end and a deformation output end. The fixed end of the fatigue loading module flexible hinge 1402 is fixedly connected to the fatigue loading module bottom base 1401 by screws, and the fatigue loading module bottom base 1401 is fixedly connected to the fatigue-end stretching carriage 1104 by the end face fixing plate 1405, the output end of the fatigue loading module flexible hinge 1402 is connected to the torsion loading fixing unit 1202 by screws and is mounted on the fatigue module slider 1404, and the fatigue loading module piezoelectric stack 1403 drives the fatigue loading module flexible hinge 1402 to deform, such that the output end of the fatigue loading module flexible hinge 1402 drives the torsion loading fixing unit 1202 in the direction of the fatigue module guide rail 1406 to generate a slight displacement, achieving a low cycle fatigue loading.

An inner frame of the fatigue loading module flexible hinge 1402 is fixed to a fatigue loading module bottom base 1401, and an outer frame is connected to a connecting plate 120211; a fatigue loading module piezoelectric stack

1403 drives the fixed-end clamp body 120204 by means of such as the fatigue loading module flexible hinge 1402, the connecting plate 120211, and a stretching - torsion composite sensor 120210 to generate a reciprocating slight displacement in high frequency, effecting the fatigue loading on the stretching material sample 51 under action of a pre-stretching load.

Referring to Figures 2 and 6, the bending loading module 13 of the present disclosure includes a bending loading module support base 1301, a support shaft 1304, a pressure sensor 1303, a bending indenter 1302. The bending loading module support base 1301, the support shaft 1304, the pressure sensor 1303 and the bending indenter 1302 are successively connected by screws. The bending loading module support base 1301 is connected to the bending feed unit 2401 by screws and they are finally fixed to the function switching unit 2404 by screws. The function switching unit 2404 drives the bending loading module 13 to achieve an adjustment of the bending work station in the axial direction of the material sample and the bending load is performed by driving the bending indenter 1302 through the motor and the ball screw with the bending feed unit 2401.

Referring to Figures 6 and 7, the micro-nano indentation test module 15 of the present disclosure includes a wedged block 1501, an indentation flexible hinge 1502, an indentation test module support base 1503, a fine adjustment unit 1504, an indentation test module piezoelectric stack 1505, a press-in force sensor 1508, a stopping sheet 1507, an indentation indenter 1509, a capacitive slight displacement sensor 1506, wherein the fine adjustment unit 1504 is composed of a movable plate 150401, a displacement sensor bracket 150402, a displacement sensor platen 150403, a fixing plate 150404 and a handle 150405. The indentation test module piezoelectric stack 1505 mounted in the indentation flexible hinge 1502 is pre-tightened by the wedged block 1501, and the press-in force sensor 1508 is located and threaded between the indentation indenter 1509 and the indentation flexible hinge 1502. The indentation flexible hinge 1502 is mounted on the indentation test module support base 1503. The stopping sheet 1507 is mounted on the indentation indenter 1509. In the fine adjustment unit 1504, the fixing plate 150404 is screwed to the indentation test module support base 1503, the movable plate 150401 is screwed to the displacement sensor bracket 150402, and the displacement sensor platen 150403 clamps the capacitive slight displacement sensor 1506 tightly. The operating position of the capacitive slight displacement sensor 1506 is adjusted so as to reach the range ability of the sensor by adjusting the relative position between the movable plate 150401 and the fixing plate 150404 by rotating the handle 150405, and the press-in depth of the indentation indenter 1509 is characterized by measuring the distance of the capacitive slight displacement sensor 1506 from the stopping sheet 1507. The function switching unit 2404 drives the micro-nano indentation test module 15 to effect the adjustment of the press-in position in the axial direction of the material sample, and the initial indentation feed is performed by the linear motion of the indentation feed unit 2403. The indentation test module piezoelectric stack 1505 drives the indentation indenter 1509 through the indentation flexible hinge 1502 and the press-in force sensor 1508 to achieve a precise feed. The press-in force in the press-in process is acquired by the press-in force sensor 1508, and the press-in depth of the indentation indenter 1509 is monitored by means of the capacitive slight displacement sensor 1506. The micro-nano indentation test module 15 is embedded in the instrument as a monitoring means of measuring the mechanical properties of the material. It can accurately measure the dynamic evolution of the indentation curve, hardness, elastic modulus and other parameters of the material sample in the local tiny area under the action of complex load conditions.

Referring to Figure 6, in the present disclosure, the bending loading module 13, the micro-nano indentation test module 15 and the infrared thermal imaging monitoring module 22 are respectively fixed to a bending feed unit 2401, an indentation feed unit 2403, and an infrared thermal imager feed unit 2402 by screws in a same manner, and are mounted on the function switching unit 2404 together. Reciprocating motion of the function switching unit 2404 realizes function switching of the bending loading, indentation loading, and infrared thermal imaging. The infrared thermal imaging monitoring module 22 is mounted on the infrared thermal imager feed unit 2402 and the function switching unit 2404 drives the infrared thermal imaging monitoring module 22 to achieve adjustment of the operating position in the infrared imaging in the axial direction of the material sample. The focal length adjustment of the infrared thermal imaging monitoring module 22 is realized through the linear motion of the infrared thermal imager feed unit 2402 to reach the purpose of monitoring the temperature distribution of the material samples in the test.

Referring to Figure 8, the low temperature loading module 17 of the present disclosure is implemented by using an external low temperature refrigerating pump opening to a refrigerating flow path. Flow paths are established inside the active-end clamp body 120116 and the fixed-end clamp body 120204. The refrigerant liquid is pumped to the internal flow path inside the active-end clamp body 120116 and the fixed-end clamp body 120204 through the external low temperature refrigeration pump, and the material sample is refrigerated in a heat conduction manner, creating a low temperature test environment for the material sample. A rotary joint 120106 includes a rotary joint stator 120106B and a rotary joint rotor 120106A on which an annular groove communicating with a flow opening in the rotary joint stator 120106B is established, so as to maintain delivery of fluid when there is a relative rotation between the stator and the rotator. A flow path in the active-end clamp body 120116 is docked with a flow path in the rotary joint 120106 by a connecting flange 120107, achieving the introduction and circulation of the refrigerant fluid when the active-end clamp body 120116 is rotated due to the torsion loading.

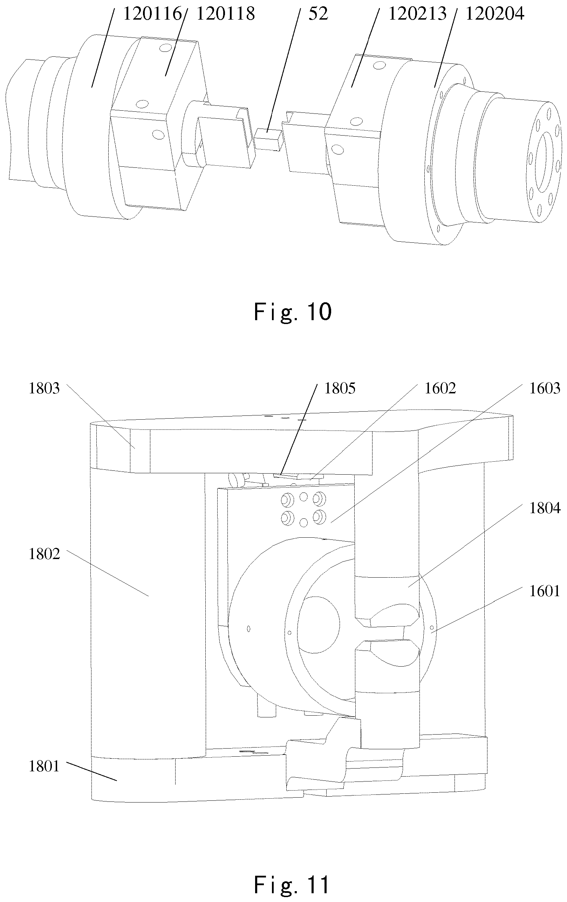

Referring to Figures 9 and 10, the clamping operation for the material sample of the present disclosure is mainly carried out by the active-end stretching clamp platen 120115, the active-end clamp body 120116, the fixed-end clamp body 120204, the fixed-end stretching clamp platen 120205, the active-end compression clamp head 120118, and the fixed-end compression clamp head 120213. The active-end clamp body 120116 is screwed to the active-end stretching clamp platen 120115 and the active-end compression clamp head 120118, and the fixed-end clamp body 120204 is screwed to the fixed-end stretching clamp platen 120205 and the fixed-end compression clamp head 120213.

For the clamping of the stretching material sample 51, the active-end clamp body 120116 and the fixed-end clamp body 120204 of the stretching clamp are designed with side structures cooperating with the clamping end of the stretching material sample 51. The material sample in stretching is positioned by the two side surfaces, and the material sample is tightly pressed by the active-end stretching clamp platen 120115 and the fixed-end stretching clamp platen 120205, achieving a reliable clamping of the stretching material sample 51.

For the clamping of the compression material sample 52, the active-end compression clamp head 120118 and the fixed-end compression clamp head 120213 are designed with grooves which cooperate with two ends of the compression material sample 52 and the material sample is pressed against the active-end compression clamp head 120118 and the fixed-end compression clamp head 120213 by means of gravity. When the compression load is loaded, the two end surfaces of the compression material sample 52 are tightly pressed by the active-end compression clamp head 120118 and the fixed-end compression clamp head 120213, achieving a reliable clamping of the compression material sample 51.

Referring to Figure 11, the high temperature loading module 16 of the present disclosure includes a halogen heating lamp 1601, an adjustment carriage 1602, a halogen lamp mounting plate 1603. The halogen heating lamp 1601 is connected to the halogen lamp mounting plate 1603 by screws and is mounted on the adjustment carriage 1602. The adjustment carriage 1602 can adjust the focal length of the halogen heating lamp 1601 along the adjustment carriage guide rail 1805. The halogen heating lamp 1601 emits light and focuses it on the surface of the material sample by the arcuate surface to achieve high temperature loading.

The magnetic field loading module 18 includes a lower magnetic yoke 1801, a coil 1802, an upper magnetic yoke 1803, magnetic pole heads 1804 and an adjustment carriage guide rail 1805. Two magnetic pole heads 1804 are arranged up and down and are fixed to the lower magnetic yoke 1801 and the upper magnetic yoke 1803, respectively. The loading of the vertical magnetic field on the material sample is realized by loading current on the coil 1802.

The loading of high temperature field is achieved by the halogen heating lamp 1601 irradiating the material sample by a focused light. The loading of the magnetic field may be realized by a controllable electromagnet consisting of the lower magnetic yoke 1801, the coil 1802, the upper magnetic yoke 1803, and the magnetic pole heads 1804. The material sample is placed between the two magnetic pole heads 1804, and the control of the magnetic field intensity is achieved by adjusting the current loaded on the coil 1802; when a high temperature field function is not needed, the halogen heating lamp 1601 can be removed by means of the adjustment carriage 1602 to prevent the optical path of the in-situ monitoring module from being blocked. It is necessary for the electric field loading module 19 to be externally connected to a high voltage direct current power supply, the conductive silver glue is used to connect two wires to two opposite surfaces of the material sample, respectively, and a DC high voltage electric field is applied to two ends of the wire to realize loading of the electric field. The arrangement of the entire test instrument in the vacuum chamber 4 helps to reduce the breakdown voltage between the two electrodes and can increase the electric field intensity in the electric field loading test.

The in-situ monitoring platform 2 is used to dynamically monitor the deformation damage, microstructure change and property evolution of the material sample under the action of the complex mechanical load and multi-physical field load; and through precise adjustment of the position and posture of the various monitoring modules, the real-time dynamical in-situ monitoring of the microcosmic deformation, damage mechanism, microstructure change and property evolution of the material samples in the complex load condition can be realized. The in-situ monitoring platform 2 includes an optical microscopic imaging monitoring module 21, an infrared thermal imaging monitoring module 22, a microscopic Raman spectrum monitoring module 23, a lateral loading observation module 24 and an offset swinging support module 25. The optical microscopic imaging monitoring module 21 and the microscopic Raman spectrum monitoring module 23 are arranged on two sides of the composite load - multi-physical field loading test platform 1 and mounted on the vibration isolation base 3; the offset swinging support module 25 is mounted on the vibration isolation base 3, providing abundant observation positions for each of the in-situ observation modules while carrying the composite load - multi-physical field loading test platform 1. The infrared thermal imaging monitoring module 22 is mounted on the lateral loading observation module 24 and the lateral loading observation module 24 is mounted on the composite load - multi-physical field loading test platform 1.

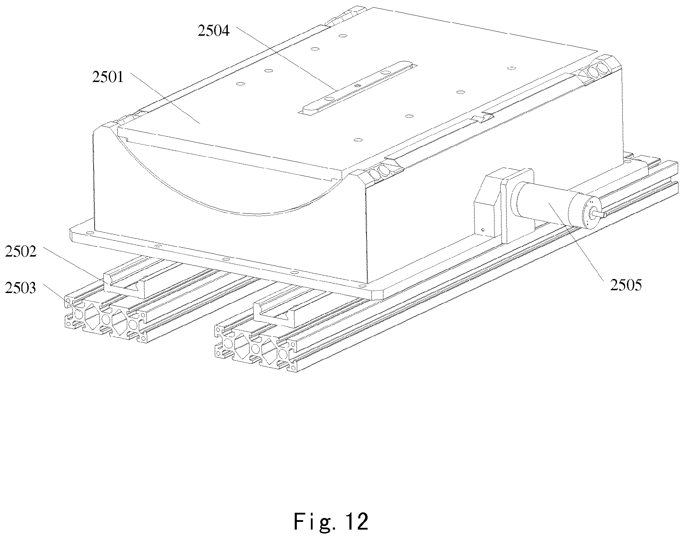

Referring to Figures. 12 and 15 to 17, the offset swinging support module 25 of the present disclosure includes a positioning section bar 2503, a heavy load guide rail 2502, a offset swinging table 2501, a positioning key 2504 and a offset swinging servo motor 2505. The base plate 1115 of the stretching module and the table surface of the offset swinging table 2501 are positioned by the positioning key 2504, and the offset swinging table 2501 is moved along the heavy load guide rail 2502. The heavy load guide rail 2502 is mounted on the vibration isolation base 3 by means of the positioning section bar 2503.

The offset swinging table 2501 driven by offset swinging servo motor 2505 can drive the composite load - multi-physical field loading test platform 1 to realize a deflection of 0° to 45° to adjust the overall posture of the material sample to facilitate realization of the in-situ monitoring function. In press-in process of the indentation indenter 1509, a certain monitoring angle is set, and an in-situ monitoring for the press-in process can be carried out. By adjusting the offset swinging angle, the indentation of the material sample after being indented by the microscopic Raman spectrum monitoring module 23 can be vertically monitored, so that the microstructure topography and composition of the indentation can be acquired and analyzed.

The instrument of the present disclosure can be integrated with the vacuum chamber 4, and the composite load - multi-physical field loading test platform 1, along with the offset swinging table 2501, is partially withdrawn from the vacuum chamber 4 at the end of the test to facilitate replacement of the material sample. At the same time, a carrier tool cart 6 is connected to the vibration isolation base 3 in the vacuum chamber 4 by docking the heavy load guide rails 2502, and the composite load - multi-physical field loading test platform 1 is completely withdrawn out of the vacuum chamber 4 to facilitate the regulation and maintenance thereof.

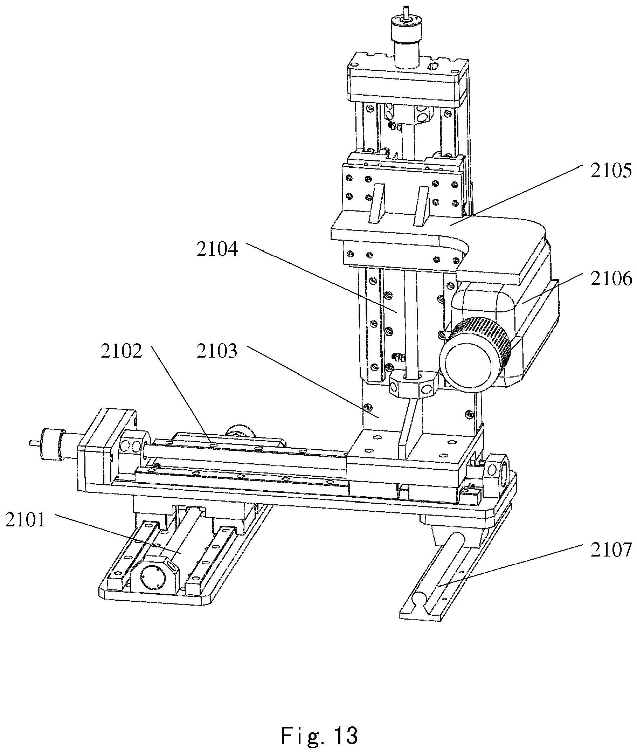

Referring to Figure 13, the optical microscopic imaging monitoring module 21 of the present disclosure includes an X-axis moving unit I 2101, an X-axis support unit I 2107, a Y-axis moving unit I 2102, a Z-axis moving unit I 2104, a support plate I 2103, an optical microscope bracket 2105 and an optical microscope 2106. The X-axis moving unit I 2101 and the X-axis support unit I 2107 are superimposed with the Y-axis moving unit I 2102, respectively, and the Y-axis moving unit I 2102 and the Z-axis moving unit I 2104 are connected by the support plate I 2103. The optical microscope 2106 is connected to the Z-axis moving unit I 2104 through an optical microscope bracket 2105. It is possible to realize a wide range of adjustment to the observation position of the optical microscope 2106, and the X-axis support unit I 2107 can effectively prevent the inclination caused by uneven distribution.

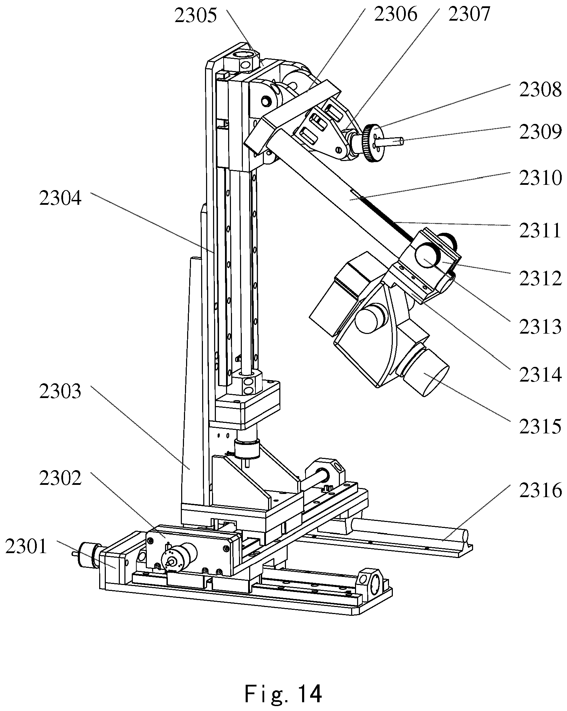

Referring to Figure 14, the microscopic Raman spectrum monitoring module 23 of the present disclosure includes an X-axis moving unit II 2301, a Y-axis moving unit II 2302, a support plate II 2303, a Z-axis moving unit II 2304, a rotary bracket 2305, an angle adjustment base 2306, an angle adjustment nut 2307, an angle adjustment hand wheel 2308, an angle adjustment screw 2309, a guide post 2310, a rack 2311, a gripper 2312, a distance adjustment hand wheel 2313, a microscopic Raman connecting plate 2314, a microscopic Raman spectrometer 2315 and an X-axis support unit II 2316. The X-axis moving unit II 2301 and the X-axis support unit II 2316 are respectively superimposed with the Y-axis moving unit II 2302, and the Y-axis moving unit II 2302 and the Z-axis moving unit II 2304 are connected through the support plate II 2303. The rotary bracket 2305 is mounted on the Z-axis moving unit II 2304, the angle adjustment base 2306 is simultaneously hinged to the rotary bracket 2305 and the angle adjustment nut 2307, and the angle adjustment screw 2309 is hinged to the rotary bracket 2305. The angle adjustment hand wheel 2308 is fixed to the angle adjustment screw 2309. The guide post 2310 is welded to the rack 2311 and is connected to the rotary bracket 2305 by screws. The microscopic Raman spectrometer 2315 is mounted on the guide post 2310 through a microscopic Raman connecting plate 2314, a gripper 2312, and a distance adjustment hand wheel 2313.

The initial adjustment of the monitoring position is carried out by driving the microscopic Raman spectrometer 2315 with the X-axis moving unit II 2301, the Y-axis moving unit II 2302 and the Z-axis moving unit II 2304. The angle adjustment nut 2307 is moved along the angle adjustment screw 2309 by rotating the angle adjustment hand wheel 2308 to change the angle between the vertical direction and the monitoring axis of the microscopic Raman spectrometer 2315 and the guide post 2310. The distance adjustment hand wheel 2313 is rotated to realize the movement of the microscopic Raman spectrometer 2315 along the direction in which the guide post 2310 extends to complete further adjustment of the monitoring point of the microscopic Raman spectrometer 2315. The microscopic Raman spectrometer 2315 enables the measurement of non-contact strain in the test and the monitoring of microstructure changes in the material sample.

Position adjustment in three, X, Y and Z, directions can be realized both in the optical microscopic imaging monitoring module 21 and the microscopic Raman spectrum monitoring module 23, and transformation of the display view field and focusing of the imaging instruments are achieved by a X-axis moving unit I 2101 and a X-axis moving unit II 2301, a Y-axis moving unit I 2102 and a Y-axis moving unit II 2302, as well as a Z-axis moving unit I 2104 and a Z-axis moving unit II 2304; the initial monitoring angle and the initial monitoring position of the microscopic Raman spectrometer 2315 can be adjusted by adjusting the rotary bracket 2305 and the distance adjustment hand wheel 2313, achieving a more extensive monitoring range. The microscopic Raman spectrometer 2315 is in the form of a built-in CCD of which the rear is integrated with a Raman spectrometer through a standard C interface; a local tiny area may be selected from the visible range according to the microscopic image and the texture component analysis of the tiny area by the Raman spectrometer is realized. The microstructure monitoring and the texture component change monitoring of the material sample in the composite load - multi-physical field coupling test is respectively realized by the two monitoring modules; and the infrared thermal imaging monitoring module 22 monitors the temperature distribution of the material sample under the temperature field in real time.

In the present disclosure, in combination with the detection control module composed of such as the signal acquisition unit and the control unit, the load environment is simulated and the in-situ observation is realized by controlling the mechanical loading and multi-physical field loading test platform and the in-situ monitoring platform. The parameter information, such as stress, strain, electric field intensity, magnetic field intensity and temperature, is acquired by the acquisition module to generate the test curve, and then the physical property parameters of the relevant material are measured.

A material property in-situ test method under a composite load mode of mechanical - electric - thermal - magnetic coupling; with respect to a material microcosmic property in-situ test method under a mechanical - electric - thermal - magnetic multi-physical field coupling based on a stretching test, including the following steps: fixing the stretching material sample 51 to the active-end clamp body 120116 and the fixed-end clamp body 120204 by the active-end stretching clamp platen 120115 and the fixed-end stretching clamp platen 120205, and causing the stretching/compression loading module 11 to drive the torsion-end stretching carriage 1103 and the fatigue-end stretching carriage 1104 to reversely move so as to achieve the stretching loading on the stretching material sample 51; wherein the torsion loading on the stretching material sample 51 is achieved by the torsion loading module 12; the stretching strain and the torsion strain of the stretching material sample 51 are measured by the linear grating reading head I 1105 and the circular grating reading head I 120117, respectively, and the stretching stress and the torsion stress are measured by the stretching and torsion composite sensor 120210; the low cycle fatigue loading module 14 can apply a low cycle fatigue load to the stretching material sample 51 under a stretching load; by driving the bending loading module 13 to the working position by means of the lateral loading observation module 24, the bending load is applied to the stretching material sample 51 and the bending force is measured by the pressure sensor 1303; the electric field is applied to the stretching material sample 51 by the electric field loading module 19 while the composite mechanical load is applied, the magnetic field is applied to the stretching material sample 51 by the magnetic field loading module 18, the intensity of the applied electric field and the intensity of the applied magnetic field are controlled by the relevant instruments, and the electric hysteresis loop and the magnetic hysteresis loop are measured during the test; the high temperature is applied to the stretching material sample 51 by the high temperature loading module 16, and then the infrared thermal imaging monitoring module 22 is moved to the working position by the lateral loading observation module 24 to measure the temperature field information of the stretching material sample 51; the low temperature loading module 17 can further apply a low temperature to the stretching material sample 51; during operation, the in situ observation to the deformation damage and the failure form of the stretching material sample 51 are carried out by the optical microscopic imaging monitoring module 21; at any time during the test, the micro-nano indentation test module 15 can be switched to the working position by the lateral loading observation module 24, the surface of the test piece is subjected to a micro-nano indentation test, and the initial indentation feed is performed by the linear motion of the indentation feed unit 2403; the indentation test module piezoelectric stack 1505 drives the indentation indenter 1509 through the indentation flexible hinge 1502 and the press-in force sensor 1508 to achieve a precise feed; a micro-nano indentation curve is drawn with the information about the press-in force and the press-in amount that are acquired by the press-in force sensor 1508 and the capacitive slight displacement sensor 1506; in such a process, the composite load - multi-physical field loading test platform 1 can be adjusted within the observation range of the microscopic Raman spectrum monitoring module 23 by the offset swinging support module 25, the in-situ test in the press-in process is performed and at the same time the Raman spectrum information of the local tiny area is obtained.

On the basis of achieving the stretching/compression loading test, at the same time, the composite load - multi-physical field loading test platform 1 of the disclosure may be integrated with other mechanical loading test modes, and can also construct a physical field environment of the high temperature/low temperature - electric field - magnetic field, wherein it is further possible to realize the analysis on microcosmic mechanical properties of the material by means of press-in detection means. At most, the composite load - multi-physical field coupling loading test of "stretching - fatigue - bending - torsion - high temperature field (low temperature field) - electric field - magnetic field" or "compression - bending - torsion - high temperature field (low temperature field) - electric field - magnetic field" can be achieved, abundant experimental environments can be simulated, abundant physical property parameters of the material can be obtained, and a specific operating condition can also be simulated in which one or more of the functions can be selected to be coupled and loaded, such as stretching - torsion - low temperature, stretching - fatigue - high temperature, compression - electric field. All the composite load modes that can be achieved by the present disclosure are shown as follows:
Single load:
stretching load, compression load, bending load, torsion load, low cycle fatigue load, high temperature field, low temperature field, electric field, magnetic field.

Two kinds of loads:
stretching - bending combination, stretching - torsion combination, stretching - low cycle fatigue combination, stretching - high temperature field combination, stretching - low temperature field combination, stretching - electric field combination, stretching - magnetic field combination, compression - bending combination, compression - torsion combination, compression - high temperature field combination, compression - low temperature field combination, compression - electric field combination, compression - magnetic field combination, bending - torsion combination, bending - low cycle fatigue combination, bending - high temperature field combination, bending - low temperature field recombination, bending - electric field combination, bending - magnetic field combination, torsion - low cycle fatigue combination, torsion - high temperature field combination, torsion - low temperature field combination, torsion - electric field combination, torsion - magnetic field combination, high temperature field - electric field combination, high temperature field - magnetic field combination, low temperature field - electric field combination, low temperature field - magnetic field combination, electric field - magnetic field combination, low cycle fatigue - high temperature field combination, low cycle fatigue - low temperature field combination, low cycle fatigue - electric field combination, low cycle fatigue - magnetic field combination.

Three kinds of loads:

stretching - bending - torsion combination, stretching - bending - high temperature field combination, stretching - bending - low temperature field combination, stretching - bending - electric field combination, stretching - bending - magnetic field combination, stretching - torsion - high temperature field combination, stretching - torsion - low temperature field combination, stretching - torsion - electric field combination, stretching - torsion - magnetic field combination, stretching - low cycle fatigue - bending combination, stretching - low cycle fatigue - torsion combination, stretching - low cycle fatigue - high temperature field combination, stretching - low cycle fatigue - low temperature field combination, stretching - low cycle fatigue - electric field combination, stretching - low cycle fatigue - magnetic field combination, stretching - high temperature field - magnetic field combination, stretching - high temperature field - electric field combination, stretching - low temperature field - magnetic field combination, stretching - low temperature field - electric field combination, compression - bending - torsion combination, compression - bending - high temperature field combination, compression - bending - low temperature field combination, compression - bending - electric field combination, compression - bending - magnetic field combination, compression - torsion - high temperature field combination, compression - torsion - low temperature field combination, compression - torsion - electric field combination, compression - torsion - magnetic field combination, compression - high temperature field - magnetic field combination, compression - high temperature field - electric field combination, compression - low temperature field - magnetic field combination, compression - low temperature - electric field combination, bending - torsion - high temperature field combination, bending - torsion - low temperature field combination, bending - torsion - electric field combination, bending - torsion - magnetic field combination, high temperature field - electric field - magnetic field combination, low temperature field - electric field - magnetic field combination, bending - torsion - low cycle fatigue combination, bending - low cycle fatigue - high temperature field combination, bending - low cycle fatigue - low temperature field combination, bending - low cycle fatigue - electric field combination, bending - low cycle fatigue - magnetic field combination, torsion - low cycle fatigue - high temperature field combination, torsion - low cycle fatigue - low temperature field combination, torsion - low cycle fatigue - electric field combination, torsion - low cycle fatigue - magnetic field combination, low cycle fatigue - high temperature field - electric field combination, low cycle fatigue - high temperature field - magnetic field combination, low cycle fatigue - low temperature field - magnetic field combination, low cycle fatigue - low temperature field - electric field combination.

Four kinds of loads:

stretching - bending - torsion - low cycle fatigue combination, stretching - bending - torsion - high temperature field combination, stretching - bending - torsion - low temperature field combination, stretching - bending - torsion - electric field combination, stretching - bending - torsion - magnetic field combination, stretching - low cycle fatigue - bending - high temperature field combination, stretching - low cycle fatigue - bending - low temperature field combination, stretching - low cycle fatigue - bending - electric field combination, stretching - low cycle fatigue - bending - magnetic field combination, stretching - low cycle fatigue - torsion - high temperature field combination, stretching - low cycle fatigue - torsion - low temperature field combination, stretching - low cycle fatigue - torsion - electric field combination, stretching - low cycle fatigue - torsion - magnetic field combination, low cycle fatigue - bending - torsion - high temperature field combination, low cycle fatigue - bending - torsion - low temperature field combination, low cycle fatigue - bending - torsion - electric field combination, low cycle fatigue - bending - torsion - magnetic field combination, stretching - bending - high temperature field - magnetic field combination, stretching - bending - high temperature field - electric field combination, stretching - bending - low temperature field - magnetic field combination, stretching - bending - low temperature field - electric field combination, stretching - bending - magnetic field - electric field combination, stretching - torsion - high temperature field - magnetic field combination, stretching - torsion - high temperature field - electric field combination, stretching - torsion - low temperature field - magnetic field combination, stretching - torsion - low temperature field - electric field combination, stretching - torsion - magnetic field - electric field combination, stretching - low cycle fatigue - high temperature field - electric field combination, stretching - low cycle fatigue - high temperature field - magnetic field combination, stretching - low cycle fatigue - low temperature field - electric field combination, stretching - low cycle fatigue - low temperature field - magnetic field combination, stretching - low cycle fatigue - magnetic field - electric field combination, low cycle fatigue - bending - high temperature- electric field combination, low cycle fatigue - bending - high temperature field - magnetic field combination, low cycle fatigue - bending - low temperature field - electric field combination, low cycle fatigue - bending - low temperature field - magnetic field combination, low cycle fatigue - bending - magnetic field - electric field combination, low cycle fatigue - torsion - high temperature field - electric field combination, low cycle fatigue - torsion - high temperature field - magnetic field combination, low cycle fatigue - torsion - low temperature field - electric field combination, low cycle fatigue - torsion - low temperature field - magnetic field combination, low cycle fatigue - torsion - magnetic field - electric field combination, low cycle fatigue - high temperature field - magnetic field - electric field combination, low cycle fatigue - low temperature field - magnetic field - electric field combination, stretching - high temperature field - magnetic field - electric field combination, stretching - low temperature field - magnetic field - electric field combination, compression - bending - torsion - high temperature field combination, compression - bending - torsion - low temperature field combination, compression - bending - torsion - electric field combination, compression - bending - torsion - magnetic field combination, compression - bending - high temperature field - magnetic field combination, compression - bending - high temperature field - electric field combination, compression - bending - low temperature field - magnetic field combination, compression - bending - low temperature field - electric field combination, compression - bending - magnetic field - electric field combination, compression - torsion - high temperature field - magnetic field combination, compression - torsion - high temperature field - electric field combination, compression - torsion - low temperature field - magnetic field compression, compression - torsion - low temperature field - electric field combination, compression - torsion - magnetic field - electric field combination, compression - high temperature field - magnetic field - electric field combination, compression - low temperature field - magnetic field - electric field combination, bending - torsion - high temperature field - electric field combination, bending - torsion - high temperature field - magnetic field combination, bending - torsion - low temperature field - electric field combination, bending - torsion - low temperature field - magnetic field combination, bending - high temperature field - magnetic field - electric field combination, bending - low temperature field - magnetic field - electric field combination, torsion - high temperature field - magnetic field - electric field combination, torsion - low temperature field - magnetic field - electric field combination.

Five kinds of loads:
stretching - bending - torsion - low cycle fatigue - high temperature field combination, stretching - bending - torsion - low cycle fatigue - low temperature field combination, stretching - bending - torsion - low cycle fatigue - electric field combination, stretching - bending - torsion - low cycle fatigue - magnetic field combination, stretching - bending - torsion - high temperature field - electric field combination, stretching - bending - torsion - high temperature field - magnetic field combination, stretching - bending - torsion - low temperature field - electric field combination, stretching - bending - torsion - low temperature field - magnetic field combination, stretching - low cycle fatigue - torsion - high temperature field - electric field combination, stretching - low cycle fatigue - torsion - high temperature field - magnetic field combination, stretching - low cycle fatigue - torsion - low temperature field - electric field combination, stretching - low cycle fatigue - torsion - low temperature field - magnetic field combination, stretching - low cycle fatigue - bending - high temperature field - electric field combination, stretching - low cycle fatigue - bending - high temperature field - magnetic field combination, stretching - low cycle fatigue - bending - low temperature field - electric field combination, stretching - low cycle fatigue - bending - low temperature field - magnetic field combination, low cycle fatigue - bending - torsion - high temperature field - electric field combination, low cycle fatigue - bending - torsion - high temperature field - magnetic field combination, low cycle fatigue - bending - torsion - low temperature field - electric field combination, low cycle fatigue - bending - torsion - low temperature field - magnetic field combination, low cycle fatigue - bending - high temperature field - magnetic field - electric field combination, low cycle fatigue - torsion - high temperature field - magnetic field - electric field combination, low cycle fatigue - bending - torsion - high temperature field - electric field - magnetic field combination, low cycle fatigue - bending - torsion - low temperature field - electric field - magnetic field combination, stretching - low cycle fatigue - high temperature field - electric field - magnetic field combination, stretching - low cycle fatigue - low temperature field - electric field - magnetic field combination, stretching - bending - high temperature field - electric field - magnetic field combination, stretching - bending - low temperature field - electric field - magnetic field combination, stretching - torsion - high temperature field - electric field - magnetic field combination, stretching - torsion - low temperature field - electric field - magnetic field combination, compression - bending - torsion - high temperature field - electric field combination, compression - bending - torsion - high temperature field - magnetic field combination, compression - bending - torsion - low temperature field - electric field combination, compression - bending - torsion - low temperature field - magnetic field combination, compression - bending - high temperature field - electric field - magnetic field combination, compression - bending - low temperature field - electric field - magnetic field combination, compression - torsion - high temperature field - electric field - magnetic field combination, compression - torsion - low temperature field - electric field - magnetic field combination, bending - torsion - high temperature field - electric field - magnetic field combination, bending - torsion - low temperature field - electric field - magnetic field combination.

Six kinds of loads:
stretching - bending - torsion - high temperature field - electric field - magnetic field combination, stretching - bending - torsion - low temperature field - electric field - magnetic field combination, compression - bending - torsion - high temperature field - electric field - magnetic field combination, compression - bending - torsion - low temperature field - electric field - magnetic field combination, stretching - low cycle fatigue - bending - high temperature field - electric field - magnetic field combination, stretching - low cycle fatigue - torsion - high temperature field - electric field - magnetic field combination, stretching - low cycle fatigue - bending - low temperature field - electric field - magnetic field combination, stretching - low cycle fatigue - torsion - low temperature field - electric field - magnetic field combination, low cycle fatigue - bending - torsion - high temperature field - electric field - magnetic field combination, low cycle fatigue - bending - torsion - low temperature field - electric field - magnetic field combination.

Seven kinds of loads:

stretching - low cycle fatigue - bending - torsion - high temperature field - electric field - magnetic field combination, stretching - low cycle fatigue - bending - torsion - low temperature field - electric field - magnetic field combination.

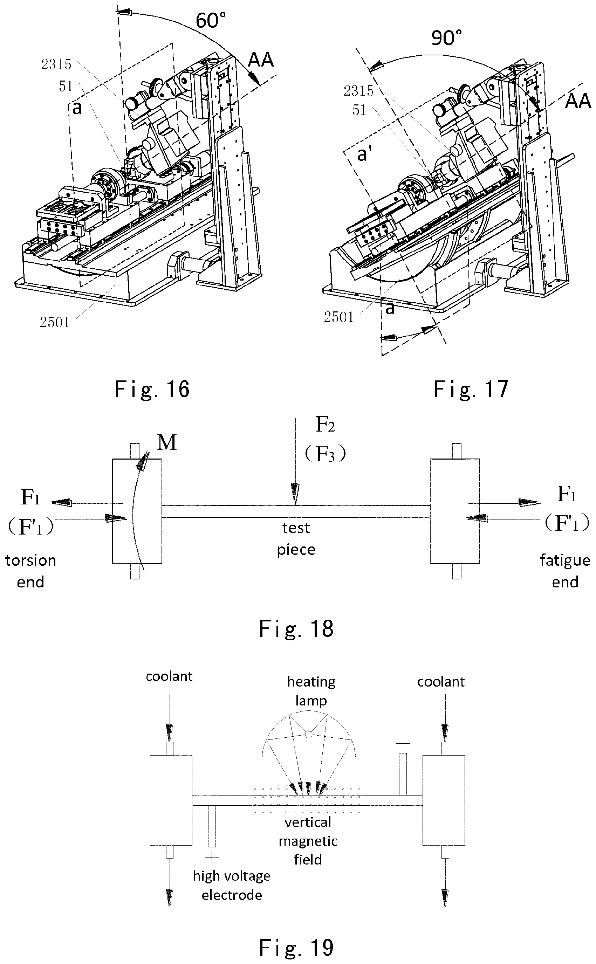

Referring to Figure 18, in the view of loading in the present disclosure, $F_1$ is the stretching force, $F_1$ is the compression force, $F_2$ is the bending force, $F_3$ is the press-in force, M is the torque.

Referring to Figure 19, the physical field loading method in the present disclosure is shown as follows: the high voltage electrode is bonded at two ends of the material sample to realize the electric field loading; the high temperature loading on the material sample is carried out by irradiation from the halogen heating lamp, and the coolant (water) is used to cool the clamp to prevent the overheat of the clamp body; the coolant (ethanol, liquid nitrogen, etc.) is introduced into the clamp to realize the cooling of the material samples; the magnetic poles arranged up and down in the middle of the material sample are powered to achieve the vertical magnetic field loading.

The relevant formulas for applying load in the present disclosure are shown as follows:

1. Under the stretching conditions

the formula for calculating the stress $\sigma$:

$$\sigma = \frac{F_1}{A} \qquad (1)$$

where $F_1$ is the stretching force, $A$ is the cross-sectional area of the material sample, the formula for calculating the strain $\varepsilon$:

$$\varepsilon = \frac{\Delta l}{l} \qquad (2)$$

where $\Delta l$ is the stretching quantity of the material sample, $l$ is the original length of the material sample.

2. Under the compression conditions

the formula for calculating the stress $\sigma$:

$$\sigma = \frac{F_1'}{A} \qquad (3)$$

where $F_1'$ is the compression force;
the formula for calculating the strain $\varepsilon$ under the compression conditions:

$$\varepsilon = \frac{\Delta l}{l} \qquad (4)$$

where $\Delta l$ is the compression quantity of the material sample.

3. Under the torsion conditions

For a material sample with a circular cross section:

the formula for calculating the maximum shear stress $\tau_{max}$:

$$\tau_{max} = \frac{M}{W_p} \qquad (5)$$

where $M$ is the torque and $W_P$ is the anti-torsion cross-section coefficient;
the formula for calculating the twisting angle $\varphi$:

$$\varphi = \frac{Ml}{GI_p} \qquad (6)$$

where $G$ is the shear modulus and $I_P$ is the polar moment of inertia of the section;

$$W_p = \frac{\pi D^3}{16}$$

$$(7)$$

$$I_P = \frac{\pi D^4}{32} \qquad (8)$$

where $D$ is the diameter of the material sample;

For a material sample with a rectangular cross section:

the formula for calculating the maximum shear stress $\tau_{max}$:

$$\tau_{max} = \frac{M}{\alpha h b^2} \qquad (9)$$

where $M$ is the torque, $h$ is the long side of the rectangular cross section, $b$ is the short side of the rectangular cross section, and $\alpha$ is a coefficient associated with $h/b$;
the formula for calculating the twisting angle $\varphi$:

$$\varphi = \frac{Ml}{GI_t} \qquad (10)$$

where $G$ is the shear modulus and $GI_t$ is the anti-torsion rigidity of the rod;

$$I_t = \beta h b^3 \qquad (11)$$

where $\beta$ is a coefficient associated with $h/b$.

4. Under the low cycle fatigue conditions

the formula for calculating the low cycle fatigue lifetime:

$$\frac{\Delta \varepsilon_t}{2} = \frac{\sigma_f'}{E}(2N_f)^b + \varepsilon_f'(2N_f)^c \qquad (12)$$

Where $\sigma_f'$ is the fatigue strength coefficient, $b$ is the fatigue strength index, $\varepsilon_f'$ is the fatigue plasticity coefficient, $c$ is the fatigue plasticity index, $E$ is the elastic modulus, and $\psi$ is the shrinkage of the end surface.

5. Under the bending conditions

the formula for calculating the maximum bending stress in the stretched side surface when bending within the elastic range :

$$\sigma_{max} = \frac{M}{W} \qquad (13)$$

where $M$ is the maximum bending moment, and $W$ is the anti-bending section coefficient of the material sample; when a three-point bending is applied,

$$M = \frac{F_2 L_s}{4} \qquad (14)$$

where $L_s$ is the span of the material sample; when a cylindrical material sample is used:

$$W = \frac{\pi D^3}{32} \qquad (15)$$

when a rectangular material sample is used:

$$W = \frac{bh^2}{6} \qquad (16)$$

6. The formula for calculating the hardness $H$ of the measured material in the indentation test:

$$H = \frac{P}{S} \qquad (17)$$

where $P$ is the real-time load corresponding to a certain indentation depth, and $S$ is the projection area of the contact region between the indentation indenter and the material sample at this moment;
the formula for calculating the projection area $S$ of the typical indenter:
Berkovich indenter:

$$S = 24.56h^2 \qquad (18)$$

cubic corner indenter:

$$S = 2.5981h^2 \qquad (19)$$

Vickers indenter:

$$S = 24.504h^2 \qquad (20)$$

tapered indenter:

$$S = \pi a^2 \qquad (21)$$

spherical indenter:

$$S = \pi a^2 \qquad (22)$$

where $h$ is the pressing depth, and a is the radius of the contact circle;
the formula for calculating the elastic modulus $E_s$ of the measured material in the X(Y)- direction indentation test is expressed as follows, the diamond being taken as an example of the indentation indenter material:

$$E_s = \frac{1 - v_s^2}{1/S_r - (1 - v_i^2)/E_i} \qquad (23)$$

where $E_s$ is the elastic modulus of the material sample, $E_r$ is the reduction modulus, $v_s$ is the Poisson's ratio of the material sample, $E_i$ is the elastic modulus of the diamond indenter (1050 GPa), $v_i$ is the Poisson's ratio of the diamond indenter (0.07).

7. Under the stretching/compression - torsion composite load

The entire circumferential surface of the material sample is full of dangerous points, and according to the third strength theory, the formula for calculating the stress $\sigma_{r3}$ corresponding to the dangerous point is:

$$\sigma_{r3} = \sqrt{\sigma^2 + 4\tau^2} = \sqrt{(\frac{F_1}{A})^2 + 4(\frac{M}{W_P})^2} \qquad (24)$$

where $F_1$ is the axial tensile force, $A$ is the cross-sectional area of the material sample, $M$ is the torque, and $W_P$ is the anti-torsion cross-section coefficient.
According to the fourth strength theory, the formula for calculating the stress $\sigma_{r4}$ corresponding to the dangerous point is:

$$\sigma_{r4} = \sqrt{\sigma^2 + 3\tau^2} = \sqrt{(\frac{F_1}{A})^2 + 3(\frac{M}{W_P})^2} \qquad (25) \ .$$

8. Under the stretching/compression - bending composite load

Dangerous points are on the stretched side of the cross section of the material sample at the middle of the standard distance. According to the third strength theory, the formula for calculating the stress $\sigma_{r3}$ corresponding to the dangerous points is:

$$\sigma_{r3} = \sqrt{\sigma^2 + 4\tau^2} = \sqrt{(\frac{M_1}{W} + \frac{F_1}{A})^2 + 4(\frac{M}{W_P})^2} \qquad (26)$$

where $M_1$ is the bending moment, and $W$ is the anti-bending section coefficient, $F_1$ is an axial stretching force, $A$ is the cross-sectional area of the material sample, $M$ is the torque, and $W_P$ is the anti-torsion cross-section coefficient

9. Under the conditions of loading high temperature/low temperature field

The quantity of the heat $Q$ irradiated on the material sample surface after the halogen heating lamp is powered:

$$Q = UIt \qquad (27)$$

where $U$ is the voltage loaded to the heating lamp, $I$ is the operating current in the heating lamp, and $t$ is the heating time.

A micro-segment of the material sample with a length of $dx$. is taken as an object to be analyzed. The quantity of the heat in the convective heat exchange $\phi_s$ is:

$$\phi_s = \frac{h(t - t_f)Cdx}{Adx} \qquad (28)$$

where $h$ is heat transfer coefficient of the convective heat transfer surface, $t_f$ is the ambient temperature, $C$ is the circumference of the cross section of the material sample, and $A$ is the cross-sectional area of the material sample.

When a high temperature field is applied to the material sample, the heat flow passing through the cross section thereof is:

$$\phi = -\lambda A \frac{dt}{dx} \qquad (29)$$

The instrument according to the present disclosure is mainly used for material in-situ test under the loading action of a composite load - multi-physical field coupling. On the basis of realization of the stretching/compression loading, the disclosure can realize the integration of multi kinds of mechanical loading forms, such as bending, torsion and low cycle fatigue. Especially a test environment of a high temperature/low temperature - electric field - magnetic field multi-physical field coupling loading is introduced. The instrument can achieve any combination of stretching/compression, bending, torsion, low cycle fatigue, temperature field, electric field and magnetic field, and at most can realize the parallel loading test of the above seven kinds of load modes at the same time. The dynamic evolution of the parameters such as indentation curve, hardness and elastic modulus of the material sample under these complex load conditions can be accurately measured with the in-situ micro-nano indentation test module embedded in the instrument. At the same time, important data information associated with the material service property, reliability and service life, such as the physical property parameters, deformation damage, microstructure change and property evolution of the material during and after the action of complex load, can be accurately and dynamically monitored by means of the optical microscopic imaging monitoring module 21, microscopic Raman monitoring module and other types of in-situ monitoring module that are embedded in the instrument. Effective means and methods for the microcosmic mechanical property test in a condition close to the service condition are provided.

The miniaturization and lightweight design in structure are sufficiently considered when designing the instrument of the present disclosure, and thus the optional vacuum chamber can be provided to place the instrument therein, providing a test environment, such as low pressure, vacuum and inert gas, for the material sample to be tested. The mechanical property test of the material sample in any one, two, three or four load loading modes of the four kinds of load modes of stretching/compression, bending, torsion and low cycle fatigue can be realized. The physical property test of the material sample in any one, two or even three kinds of external field loading mode of electric, heat and magnetic fields can be achieved. The microcosmic property test of the material sample in the coupling loading conditions of combining any one, two, three or even four kinds of mechanical loads with any one, two, three kinds of external field load can be achieved. At most, the microcosmic property test of the material in the parallel loading mode with coexistence of the above seven kinds of load in a condition close to the service condition can be achieved. In particular, the change of the basic mechanical parameters such as hardness and elastic modulus of the material sample resulting from the action of the above complex load can be dynamically measured and analyzed by the embedded micro-nano indentation test module. In particular, the microstructure evolution and property weakening mechanism of the material sample under the above complex load conditions can be dynamically monitored and analyzed by means of various kinds of embedded in-situ monitoring modules, and the microcosmic mechanical behavior, deformation and damage mechanism as well as the laws of relations between the load action and material properties can be obtained.

The foregoing description has merely given the preferred embodiments of the present disclosure and is not intended to limit the present disclosure. Various changes and modifications may be made by those skilled in the art.

## Claims

1. A test instrument for in-situ testing material property of a material sample to be tested under a composite mechanical load of one or more of four mechanical loads of stretching/compression, low cycle fatigue, torsion and bending, and/or under an external multi-physical field consisting of a stress, thermal, electric and/or magnetic field coupled to the sample, the test instrument comprising

    a composite mechanical load and/or multi-physical field loading test platform (1),
    an in-situ monitoring platform (2) and
    a vibration isolation base (3) for supporting the composite mechanical load and/or multi-physical field loading test platform (1) and the in-situ monitoring platform (2) to provide a basic installation and positioning for the composite mechanical load and/or multi-physical field loading test platform (1) and the in-situ monitoring platform (2) and to provide an effective vibration isolation treatment for the test process,
    wherein the composite mechanical load and/or multi-physical field loading test platform (1) is configured to apply the composite mechanical load to the material sample to be tested, and at the same time, is configured to precisely detect a load signal and a deformation signal such that a mechanical property test of the material under the composite mechanical load is realized; and wherein according to the test conditions, the multi-physical field is applied to the material sample to be tested, and precise measurement of external physical field loading parameters and corresponding physical property parameters of the material are achieved;
    wherein the composite mechanical load and/or multi-physical field loading test platform (1) is further configured to apply a complex load of mechanical and external field coupling action in a condition close to a service condition to the material sample to be tested, and at the same time, basic physical property parameters of the material are accurately measured and quantitatively analyzed;
    wherein the composite mechanical load and/or multi-physical field loading test platform (1) comprises
    a stretching/compression loading module (11) fixed to a table surface of an offset swinging table (2501) and comprising a torsion-end stretching carriage (1103) and a fatigue-end stretching carriage (1104),
    a torsion loading module (12) comprising two parts, a torsion loading active unit (1201) and a torsion loading fixing unit (1202) which are respectively attached to the torsion-end stretching carriage (1103) and the fatigue-end stretching carriage (1104) of the stretching/compression loading module (11),
    a bending loading module (13) comprising a bending indenter (1302),
    a low cycle fatigue loading module (14) mounted on the fatigue-end stretching carriage (1104) and is connected to a tail of the torsion loading fixing unit (1202),
    a micro-nano indentation test module (15) comprising an indentation indenter (1509),
    a high temperature loading module (16) comprising an adjustment carriage (1602),
    a low temperature loading module (17) configured to be coupled to a circulating refrigeration pump,
    a magnetic field loading module (18) comprising an adjustment carriage guide rail (1805),
    an electric field loading module (19) configured to be coupled to an external DC power supply, and
    an infrared thermal imaging monitoring module (22),
    a lateral loading observation module (24) comprising a bending feed unit (2401) to which the bending loading module (13) is fixed, an infrared thermal imager feed unit (2402) to which the infrared thermal imaging monitoring module (22) is fixed, and an indentation feed unit (2403) to which the micro-nano indentation test module (15) is fixed,
    a function switching unit (2404) on which the bending feed unit (2401), the infrared thermal imager feed unit (2402) and the micro-nano indentation feed unit (2403) are mounted, wherein a reciprocating motion of the function switching unit realizes positional selection and work station switching of the bending loading module (13), the micro-nano indentation test module (15), and the infrared thermal imaging monitoring module (22);
    wherein a linear motion of the infrared thermal imager feed unit (2402) is configured to adjust a viewing range of the infrared thermal imaging monitoring module (22), a linear motion of the bending feed unit (2401) is configured to drive the bending indenter (1302) to achieve the bending load, and a linear motion of the indentation feed unit (2403) is configured to drive the indentation indenter (1509) to initially position a press-in point; and
    wherein the high temperature loading module (16) is connected to the magnetic field loading module (18) by the adjustment carriage (1602) and the adjustment carriage guide rail (1805), and

wherein the magnetic field loading module (18) and the lateral loading observation module (24) are respectively fixed to the stretching/compression loading module (11) on two sides of a main axis of the stretching/compression loading module (11).

2. The test instrument according to claim 1, further comprising a vacuum chamber (4) and a vacuum pump,

wherein a vibration isolation base (3) is integrated in the vacuum chamber (4) to prevent the vibration generated during the operation of the vacuum pump from affecting the in-situ monitoring effect of the instrument; wherein the composite mechanical load and/or multi-physical field loading test platform (1), the in-situ monitoring arrangement (2) and the vacuum chamber (4) are integrated to realize the composite mechanical load and/or multi-physical field loading test and the in-situ monitoring in a vacuum environment; wherein the composite mechanical load and/or multi-physical field loading test platform (1) is placed on a offset swinging support module (25) of which the offset swinging table (2501) is placed on a heavy load guide rail (2502), wherein the composite mechanical load and/or multi-physical field loading test platform (1) and the offset swinging table (2501) are removable from the vacuum chamber (4) to facilitate replacement of the material sample; and wherein a carrier tool cart (6) is connected to the vibration isolation base (3) in the vacuum chamber (4) by docking the guide rails, and wherein the composite mechanical load and/or multi-physical field loading test platform (1) is completely withdrawable out of the vacuum chamber (4) to facilitate regulation and maintenance thereof.

3. The test instrument according to claim 1, wherein the stretching/compression loading module (11) adopts a bidirectional stretching structure, and comprises

a stretching/compression servo motor (1101) driving a bidirectional screw (1102) to move a torsion-end stretching carriage (1103) and a fatigue-end stretching carriage (1104) so as to ensure the consistence of moving speed and stroke on two sides, applying the stretching/compression load, and a first linear grating reading head (1105) and a second linear grating reading head (1118) to measure the stretching/compression loading deformation.

4. The test instrument according to claim 3,

wherein the torsion loading module (12) comprises two portions, i.e., a torsion loading active unit (1201) and a torsion loading fixing unit (1202), and is provided in such a manner that one end thereof twists and the other end is fixed, wherein the torsion loading active unit (1201) is of a loading end, a torsion servo motor (120104) drives a torsion drive gear (120108) and a torsion driven gear (120109) to move an active-end clamp body (120116) to realize the loading of the torque; wherein the torsion loading fixing unit (1202) is of a fixed end, the torque is transferred from a fixed-end clamp body (120204) and a connecting shaft (120209) to a stretching - torsion composite sensor (120210) to realize measurement of the stretching force and the torque; the active-end clamp body (120116) and the fixed-end clamp body (120204) are respectively installed with a first circular grating reading head (120117) and a second circular grating reading head (120202), and accurate measurement of twisting angle is achieved by measuring the angle difference read in the torsion measurement test; wherein a rotary joint (120106) of the torsion loading active unit (1201) comprises a rotary joint stator (120106B) and a rotary joint rotor (120106A) on which an annular groove communicating with a flow opening in the rotary joint stator (120106B) is established, so as to still maintain delivery of fluid when there is a relative rotation between the stator and the rotor; a flow path in the active-end clamp body (120116) is docked with a flow path in the rotary joint (120106) by a connecting flange (120107), achieving the introduction and circulation of the refrigerant fluid when the active-end clamp body (120116) is rotated due to the torsion loading, the low temperature loading module (17) pumps the refrigerant liquid to the flow paths established inside the active-end clamp body (120116) and the fixed-end clamp body (120204) by means of the internal refrigeration flow path inside the active-end clamp body (120116) and the fixed-end clamp body (120204) through the external low temperature refrigeration pump, and the material sample is refrigerated in a heat conduction manner, creating a low temperature test environment for the material sample.

5. The test instrument according to claim 1, wherein an inner frame of a fatigue loading module flexible hinge (1402) of the low cycle fatigue loading module (14) is fixed to a fatigue loading module bottom base (1401), and an outer frame is connected to a connecting plate (120211); a fatigue loading module piezoelectric stack (1403) drives the fixed-end clamp body (120204) by means of the fatigue loading module flexible hinge (1402), the connecting plate (120211), and a stretching - torsion composite sensor (120210) to generate a reciprocating slight displacement in high frequency, achieving the fatigue loading on the stretching material sample (51) under action of a pre-stretching load; under a large stretching load, the large stretching load is removed by tightening the screws to fasten an unloading plate (120212) to the connecting plate (120211) and the fatigue-end stretching carriage (1104), preventing the fatigue loading module piezoelectric stack (1403) from being damaged.

6. The test instrument according to claim 4, wherein the micro-nano indentation test module (15) achieves initial indentation feed by linear motion of the indentation feed unit (2403), the indentation test module piezoelectric stack (1505) drives the indentation indenter (1509) by an indentation flexible hinge (1502) to achieve an accurate feed, press-in force during press-in process is acquired by an press-in force sensor (1508), and press-in depth of the indentation indenter (1509) is monitored by a capacitive slight displacement sensor (1506).

7. The test instrument according to claim 2, wherein

the high temperature loading module (16) comprises a halogen heating lamp (1601) for generating the loading with the high temperature field by irradiating the material sample with focused light, an adjustment carriage (1602), and a halogen lamp mounting plate (1603), wherein the halogen heating lamp (1601) is connected to the halogen lamp mounting plate (1603) by screws and mounted on the adjustment carriage (1602); and wherein the halogen heating lamp (1601) is removable by means of the adjustment carriage (1602) to prevent the optical path of the in-situ monitoring module from being blocked when a high temperature field function is not needed, the magnetic field loading module (18) comprises a controllable electromagnet consisting of a lower magnetic yoke (1801), a coil (1802), an upper magnetic yoke (1803), magnetic pole heads (1804), the two magnetic pole heads (1804) are arranged up and down and are fixed to the lower magnetic yoke (1801) and the upper magnetic yoke (1803), wherein the material sample is to be positioned between the two magnetic pole heads (1804), and the magnetic field intensity between the two magnetic pole heads (1804) depends from a current loaded on the coil (1802),
the electric field loading module (19) is externally connected to a high voltage direct current power supply, and comprises two wires connected with the DC power supply to realize loading of the electric field, wherein the two wires are configured to be connected to two opposite surfaces of the material sample by conductive silver glue, respectively; and
wherein the entire test instrument is located in the vacuum chamber (4) to reduce the breakdown voltage between the two wires to allow increased electric field intensity in the electric field loading test.

8. The test instrument according to claim 6, wherein the in-situ monitoring platform (2) is used to dynamically monitor the deformation damage, microstructure change and property evolution of the material sample under the action of the composite mechanical load and multi-physical field load; through precise adjustment of the position and posture of the various monitoring modules, the real-time dynamical in-situ monitoring of the microcosmic deformation, damage mechanism, microstructure change and property evolution of the material samples under the composite mechanical load and multi-physical field load is realized; the in-situ monitoring platform (2) comprises an optical microscopic imaging monitoring module (21), an infrared thermal imaging monitoring module (22), a microscopic Raman spectrum monitoring module (23), a lateral loading observation module (24) and an offset swinging support module (25); the optical microscopic imaging monitoring module (21) and the microscopic Raman spectrum monitoring module (23) are arranged on two sides of the composite mechanical load and/or multi-physical field loading test platform (1) and mounted on the vibration isolation base (3); the offset swinging support module (25) is mounted on the vibration isolation base (3), providing abundant observation positions for each of the in-situ observation modules while carrying the composite mechanical load and/or multi-physical field loading test platform (1); the infrared thermal imaging monitoring module (22) is mounted on the lateral loading observation module (24) and the lateral loading observation module (24) is mounted on the composite mechanical load and/or multi-physical field loading test platform (1).

9. The test instrument according to claim 8, wherein position adjustment in three, X, Y and Z, directions is realized both in the optical microscopic imaging monitoring module (21) and the microscopic Raman spectrum monitoring module (23), and transformation of the display view field and focusing of the imaging instruments are achieved by a first X-axis moving unit (2101) and a second X-axis moving unit (2301), a first Y-axis moving unit I (2102) and a second Y-axis moving unit (2302), as well as a first Z-axis moving unit I (2104) and a second Z-axis moving unit (2304); the initial monitoring angle and the initial monitoring position of the microscopic Raman spectrometer (2315) are adjusted by adjusting the rotary bracket (2305) and the distance adjustment hand wheel (2313), achieving a more extensive monitoring range; the microscopic Raman spectrometer (2315) is in the form of a built-in CCD of which the rear is integrated with a Raman spectrometer through a standard C interface; a local tiny area is selected from the visible range according to the microscopic image and the texture component analysis of the tiny area by the Raman spectrometer is realized; the microstructure monitoring and the texture component change monitoring of the material sample in the composite mechanical load and/or multi-physical field coupling test is respectively realized by the optical microscopic imaging monitoring module (21) and the microscopic Raman spectrum monitoring module (23); and the infrared thermal imaging monitoring module (22) monitors the temperature distribution of the material sample under the temperature field in real time.

10. A test method for in-situ testing material property of a material sample to be tested under a composite mechanical load of one or more of four mechanical loads of stretching/compression, low cycle fatigue, torsion and bending, and/or under an external multi-physical field consisting of a stress, thermal, electric and/or magnetic field coupled to the sample, with the test instrument according to claim 8 or 9, wherein the test method relates to a material microcosmic property in-situ test method based on a stretching test, and comprises the following steps: fixing the stretching material sample (51) to the active-end clamp body (120116) and the fixed-end clamp body (120204) by an active-end stretching clamp platen (120115) and a fixed-end stretching clamp platen (120205), and causing the stretching/compression loading module (11) to drive the torsion-end stretching carriage (1103) and the fatigue-end stretching carriage (1104) to reversely move so as to achieve the stretching loading on the stretching material sample (51); wherein the torsion loading on the stretching material sample (51) is achieved by the torsion loading module (12); the stretching strain and the torsion strain of the stretching material sample (51) are measured by the first linear grating reading head (1105) and the first circular grating reading head (120117), respectively, and the stretching stress and the torsion stress are measured by the stretching and torsion composite sensor (120210); the low cycle fatigue loading module (14) applies a low cycle fatigue load to the stretching material sample (51) under a stretching load; by driving the bending loading module (13) to the working position by means of the lateral loading observation module (24), the bending load is applied to the stretching material sample (51) and the bending force is measured by the pressure sensor (1303); the electric field is applied to the stretching material sample (51) by the electric field loading module (19) while the composite mechanical load is applied, the magnetic field is applied to the stretching material sample (51) by the magnetic field loading module (18), the intensity of the applied electric field and the intensity of the applied magnetic field are controlled by the relevant instruments, and the electric hysteresis loop and the magnetic hysteresis loop are measured during the test; the high temperature is applied to the stretching material sample (51) by the high temperature loading module (16), and then the infrared thermal imaging monitoring module (22) is moved to the working position by the lateral loading observation module (24) to measure the temperature field information of the stretching material sample (51); the low temperature loading module (17) further applies a low temperature to the stretching material sample (51); during operation, the in situ observation to the deformation damage and the failure form of the stretching material sample (51) are carried out by the optical microscopic imaging monitoring module (21); at any time during the test, the micro-nano indentation test module (15) is switched to the working position by the lateral loading observation module (24), the surface of the test piece is subjected to a micro-nano indentation test, and the initial indentation feed is performed by the linear motion of the indentation feed unit (2403); the indentation test module piezoelectric stack (1505) drives the indentation indenter (1509) through the indentation flexible hinge (1502) and the press-in force sensor (1508) to achieve a precise feed; a micro-nano indentation curve is drawn with the information about the press-in force and the press-in amount that are acquired by the press-in force sensor (1508) and the capacitive slight displacement sensor (1506); in such a process, the composite mechanical load and/or multi-physical field loading test platform (1) is adjusted within the observation range of the microscopic Raman spectrum monitoring module (23) by the offset swinging support module (25), the in-situ test in the press-in process is performed and at the same time the Raman spectrum information of the local tiny area is obtained.

**Patentansprüche**

1. Prüfinstrument zur In-Situ-Prüfung von Materialeigenschaften einer Materialprobe, die unter einer kombinierten mechanischen Beanspruchung von einer oder mehreren von vier mechanischen Beanspruchungen umfassend Dehnung/Verdichtung, niederzyklische Ermüdung, Torsion und Biegung und/oder unter einem externen multiphysikalischen Feld bestehend aus einem Spannungs-, Wärme-, elektrischen und/oder Magnetfeld, das mit der Probe gekoppelt ist, zu prüfen ist, wobei das Prüfinstrument Folgendes umfasst:

eine kombinierte mechanische Beanspruchungs- und/oder multiphysikalische Feldbeanspruchungsprüfungsplattform (1),
eine In-Situ-Überwachungsplattform (2) und
eine Schwingungsisolierungsbasis (3) zum Tragen der kombinierten mechanischen Beanspruchungs- und/oder multiphysikalischen Feldbeanspruchungsprüfungsplattform (1) und der In-Situ-Überwachungsplattform (2), um eine grundlegende Installation und Positionierung für die kombinierte mechanische Beanspruchungs- und/oder multiphysikalische Feldbeanspruchungsprüfungsplattform (1) und die In-Situ-Überwachungsplattform (2) vorzusehen und eine effektive Schwingungsisolierungsbehandlung für den Prüfvorgang vorzusehen,

wobei die kombinierte mechanische Beanspruchungs- und/oder multiphysikalische Feldbeanspruchungsprüfungsplattform (1) dazu ausgelegt ist, die kombinierte mechanische Beanspruchung und auf die zu prüfende Materialprobe aufzubringen, und gleichzeitig dazu ausgelegt ist, ein Beanspruchungssignal und ein Verformungssignal genau zu erkennen, sodass eine mechanische Eigenschaftsprüfung des Materials unter der kombinierten mechanischen Beanspruchung durchgeführt wird; und wobei entsprechend den Prüfungsbedingungen das multiphysikalische Feld auf die zu prüfende Materialprobe aufgebracht wird und die genaue Messung externer physikalischer Feldbeanspruchungsparameter und zugehöriger physikalischer Eigenschaftsparameter des Materials erreicht wird;

wobei die kombinierte mechanische Beanspruchungs- und/oder multiphysikalische Feldbeanspruchungsprüfungsplattform (1) ferner dazu ausgelegt ist, eine komplexe Beanspruchung einer mechanischen und externen Feldkopplungsaktion unter einer Bedingung aufzubringen, die einer Betriebsbedingung der zu prüfenden Materialprobe nahe kommt, und wobei gleichzeitig grundlegende physikalische Eigenschaftsparameter des Materials genau gemessen und quantitativ analysiert werden;

wobei die kombinierte mechanische Beanspruchungs- und/oder multiphysikalische Feldbeanspruchungsprüfungsplattform (1) Folgendes umfasst:

ein Dehnungs-/Verdichtungsbeanspruchungsmodul (11), das an einer Tischoberfläche eines Versatzschwenktisches (2501) fixiert ist und einen Dehnungsschlitten am Torsionsende (1103) und einen Dehnungsschlitten am Ermüdungsende (1104) umfasst,

ein Torsionsbeanspruchungsmodul (12), umfassend zwei Teile, eine Torsionsbeanspruchungswirkeinheit (1201) und eine Torsionsbeanspruchungsfixierungseinheit (1202), die jeweils am Dehnungsschlitten am Torsionsende (1103) und am Dehnungsschlitten am Ermüdungsende (1104) des Dehnungs-/Verdichtungsbeanspruchungsmoduls (11) befestigt sind,

ein Biegebeanspruchungsmodul (13), umfassend einen Biegungsprüfkörper (1302),

ein niederzyklisches Ermüdungsbeanspruchungsmodul (14), das am Dehnungsschlitten am Ermüdungsende (1104) montiert und mit einem hinteren Ende der Torsionsbeanspruchungsfixierungseinheit (1202) verbunden ist,

ein Mikro-Nano-Eindruckprüfmodul (15), umfassend einen Eindruckprüfkörper (1509),

ein Hochtemperaturbeanspruchungsmodul (16), umfassend einen Einstellschlitten (1602),

ein Niedrigtemperaturbeanspruchungsmodul (17), das dazu ausgelegt ist, mit einer Kälteumwälzpumpe gekoppelt zu sein,

ein Magnetfeldbeanspruchungsmodul (18), umfassend eine Einstellschlittenführungsschiene (1805),

ein elektrisches Feldbeanspruchungsmodul (19), das dazu ausgelegt ist, mit einer externen Gleichstromzufuhr gekoppelt zu sein, und

ein Infrarot-Wärmebildgebungsüberwachungsmodul (22),

ein Querbeanspruchungsüberwachungsmodul (24), umfassend eine Biegevorschubeinheit (2401), an der ein Biegebeanspruchungsmodul (13) fixiert ist, eine Infrarot-Wärmebildgebervorschubeinheit (2402), an der das Infrarot-Wärmebildgebungsüberwachungsmodul (22) fixiert ist, und eine Eindruckvorschubeinheit (2403), an der das Mikro-Nano-Eindruckprüfmodul (15) fixiert ist,

eine Funktionswechseleinheit (2404), an der die Biegevorschubeinheit (2401), die Infrarot-Wärmebildgebervorschubeinheit (2402) und die Mikro-Nano-Eindruckvorschubeinheit (2403) montiert sind, wobei eine Pendelbewegung der Funktionswechseleinheit die Positionsauswahl und den Arbeitsstationswechsel des Biegebeanspruchungsmoduls (13), des Mikro-Nano-Eindruckprüfmoduls (15) und des Infrarot-Wärmebildgebungsüberwachungsmoduls (22) durchführt;

wobei eine Linearbewegung der Infrarot-Wärmebildgebervorschubeinheit (2402) dazu ausgelegt ist, einen Betrachtungsbereich des Infrarot-Wärmebildgebungsüberwachungsmoduls (22) einzustellen, wobei eine Linearbewegung der Biegevorschubeinheit (2401) dazu ausgelegt ist, den Biegungsprüfkörper (1302) anzutreiben, die Biegebeanspruchung zu erreichen, und wobei eine Linearbewegung der Eindruckvorschubeinheit (2403) dazu ausgelegt ist, den Eindruckprüfkörper (1509) anzutreiben, einen Eindrückpunkt anfänglich zu positionieren; und

wobei das Hochtemperaturbeanspruchungsmodul (16) über den Einstellschlitten (1602) und die Einstellschlittenführungsschiene (1805) mit dem Magnetfeldbeanspruchungsmodul (18) verbunden ist und wobei das Magnetfeldbeanspruchungsmodul (18) und das Querbeanspruchungsüberwachungsmodul (24) jeweils auf zwei Seiten einer Hauptachse des Dehnungs-/Verdichtungsbeanspruchungsmoduls (11) am Dehnungs-/Verdichtungsbeanspruchungsmodul (11) fixiert sind.

2. Prüfinstrument nach Anspruch 1, ferner umfassend eine Vakuumkammer (4) und eine Vakuumpumpe,

wobei eine Schwingungsisolierungsbasis (3) in die Vakuumkammer (4) integriert ist, um zu verhindern, dass die während des Betriebs der Vakuumpumpe erzeugte Schwingung die In-Situ-Überwachungswirkung des Instruments beeinträchtigt;

wobei die kombinierte mechanische Beanspruchungs- und/oder multiphysikalische Feldbeanspruchungsprüfungsplattform (1), die In-Situ-Überwachungsanordnung (2) und die Vakuumkammer (4) integriert sind, um die kombinierte mechanische Beanspruchungs- und/oder multiphysikalische Feldbeanspruchungsprüfung und die In-Situ-Überwachung in einer Vakuumumgebung durchzuführen;

wobei die kombinierte mechanische Beanspruchungs- und/oder multiphysikalische Feldbeanspruchungsprüfungsplattform (1) auf einem Versatzschwenkträgermodul (25) platziert ist, dessen Versatzschwenktisch (2501) auf einer Schwerlastführungsschiene (2502) platziert ist,

wobei die kombinierte mechanische Beanspruchungs- und/oder multiphysikalische Feldbeanspruchungsprüfungsplattform (1) und der Versatzschwenktisch (2501) von der Vakuumkammer (4) abnehmbar sind, um den Austausch der Materialprobe zu ermöglichen; und

wobei ein Trägerwerkzeugwagen (6) mit der Schwingungsisolierungsbasis (3) in der Vakuumkammer (4) durch Andocken der Führungsschienen verbunden ist und wobei die kombinierte mechanische Beanspruchungs- und/oder multiphysikalische Feldbeanspruchungsprüfungsplattform (1) aus der Vakuumkammer (4) vollständig herausnehmbar ist, um deren Regelung und Wartung zu ermöglichen.

3. Prüfinstrument nach Anspruch 1, wobei das Dehnungs-/Verdichtungsbeanspruchungsmodul (11) eine bidirektionale Dehnungsstruktur einnimmt und Folgendes umfasst:

einen Dehnungs-/Verdichtungs-Servomotor (1101), der eine bidirektionale Schraube (1102) antreibt, um einen Dehnungsschlitten am Torsionsende (1103) und einen Dehnungsschlitten am Ermüdungsende (1104) zu bewegen, um beim Aufbringen der Dehnungs-/Verdichtungsbeanspruchung die Konsistenz der Bewegungsgeschwindigkeit und des Hubs auf zwei Seiten zu gewährleisten und

einen ersten linearen Gitterlesekopf (1105) und einen zweiten linearen Gitterlesekopf (1118), um die Dehnungs-/Verdichtungsbeanspruchungsverformung zu messen.

4. Prüfinstrument nach Anspruch 3,

wobei das Torsionsbeanspruchungsmodul (12) zwei Abschnitte umfasst, d. h. eine Torsionsbeanspruchungswirkeinheit (1201) und eine Torsionsbeanspruchungsfixierungseinheit (1202), und derart vorgesehen ist, dass sich ein Ende davon verdreht und das andere Ende fixiert ist, wobei sich die Torsionsbeanspruchungswirkeinheit (1201) am Beanspruchungsende befindet, ein Torsionsservomotor (120104) ein Torsionsantriebsrad (120108) und ein angetriebenes Torsionsrad (120109) antreibt, um einen Einspannkörper am aktiven Ende (120116) zu bewegen um die Drehmomentbeanspruchung durchzuführen; wobei sich die Torsionsbeanspruchungsfixierungseinheit (1202) am fixierten Ende befindet, wobei das Drehmoment von einem Einspannkörper am fixierten Ende (120204) und einer Verbindungswelle (120209) zu einem kombinierten Dehnungs-Torsions-Sensor (120210) übertragen wird, um die Messung der Dehnungskraft und des Drehmoments durchzuführen; wobei der Einspannkörper des aktiven Endes (120116) und der Einspannkörper des fixierten Endes (120204) jeweils mit einem ersten kreisförmigen Gitterlesekopf (120117) und einem zweiten kreisförmigen Gitterlesekopf (120202) montiert sind und die genaue Messung des Verdrehwinkels durch Messen der bei der Torsionsmessprüfung gelesenen Winkeldifferenz erreicht wird;

wobei ein Drehgelenk (120106) der aktiven Torsionsbeanspruchungseinheit (1201) einen Drehgelenkstator (120106B) und einen Drehgelenkrotor (120106A) umfasst, an dem eine ringförmige Nut, die mit einer Strömungsöffnung im Drehgelenkstator (120106B) kommuniziert, aufgebaut ist, um die Abgabe von Fluid zu erhalten, wenn es eine relative Drehung zwischen dem Stator und dem Rotor gibt; wobei ein Strömungsweg im Einspannkörper des aktiven Endes (120116) über einen Verbindungsflansch (120107) an einem Strömungsweg im Drehgelenk (120106) angedockt ist, wodurch eine Einleitung und Zirkulation des Kühlfluids erreicht wird, wenn der Einspannkörper des aktiven Endes (120116) aufgrund der Torsionsbeanspruchung gedreht wird, wobei das Niedrigtemperaturbeanspruchungsmodul (17) die Kühlflüssigkeit mittels des internen Kühlungsströmungswegs innerhalb des Einspannkörpers des aktiven Endes (120116) und des Einspannkörpers des fixierten Endes (120204) durch die externe Niedrigtemperaturkühlpumpe zu den innerhalb des Einspannkörpers des aktiven Endes (120116) und des Einspannkörpers des fixierten Endes (120204) aufgebauten Strömungswegen pumpt und die Materialprobe mittels Wärmeleitung gekühlt wird, wodurch eine Niedrigtemperaturprüfumgebung für die Materialprobe erzeugt wird.

5. Prüfinstrument nach Anspruch 1, wobei ein innerer Rahmen eines flexiblen Ermüdungsbeanspruchungsmodulgelenks (1402) des niederzyklischen Ermüdungsbeanspruchungsmoduls (14) an einer Ermüdungsbeanspruchungsmodulbodenbasis (1401) fixiert ist und ein äußerer Rahmen mit einer Verbindungsplatte (120211) verbunden ist; wobei ein piezoelektrischer Stapel des Ermüdungsbeanspruchungsmoduls (1403) den Einspannkörper des fixierten Endes (120204) mittels des flexiblen Ermüdungsbeanspruchungsmodulgelenks (1402), der Verbindungsplatte (120211) und des kombinierten Dehnungs-Torsions-Sensors (120210) antreibt, um eine leichte Verschiebung in hoher Frequenz zu erzeugen, wodurch die Ermüdungsbeanspruchung auf die dehnende Materialprobe (51) unter Einwirkung einer Vordehnungsbeanspruchung erreicht wird; wobei unter einer großen Dehnungsbeanspruchung die große Dehnungsbeanspruchung durch Anziehen der Schrauben zum Befestigen einer Entlastungsplatte (120212) an der Verbindungsplatte (120211) und am Dehnungsschlitten des Ermüdungsendes (1104) entfernt wird, wodurch die Beschädigung des piezoelektrischen Stapels des Ermüdungsbeanspruchungsmoduls (1403) verhindert wird.

6. Prüfinstrument nach Anspruch 4, wobei das Mikro-Nano-Eindruckprüfmodul (15) durch lineare Bewegung der Eindruckvorschubeinheit (2403) einen anfänglichen Eindruckvorschub erreicht, wobei der piezoelektrische Stapel des Eindruckprüfmoduls (1505) den Eindruckprüfkörper (1509) über ein flexibles Eindruckgelenk (1502) antreibt, um einen genauen Vorschub zu erhalten, wobei die Eindrückkraft während des Eindrückvorgangs durch einen Eindrückkraftsensor (1508) erhalten wird und die Eindrücktiefe des Eindruckprüfkörpers (1509) von einem kapazitiven Sensor für leichte Verschiebung (1506) überwacht wird.

7. Prüfinstrument nach Anspruch 2, wobei

das Hochtemperaturbeanspruchungsmodul (16) eine Halogenheizlampe (1601) zum Erzeugen der Beanspruchung mit dem Hochtemperaturfeld durch Bestrahlen der Materialprobe mit fokussiertem Licht, einen Einstellschlitten (1602) und eine Halogenlampenmontageplatte (1603) umfasst, wobei die Halogenheizlampe (1601) über Schrauben mit der Holgenlampenmontageplatte (1603) verbunden und am Einstellschlitten (1602) montiert ist; und wobei die Halogenheizlampe (1601) mittels des Einstellschlittens (1602) entfernbar ist, um zu verhindern, dass der Lichtweg des In-Situ-Überwachungsmoduls blockiert wird, wenn eine Hochtemperaturfunktion nicht benötigt wird,
das Magnetfeldbeanspruchungsmodul (18) einen steuerbaren Elektromagneten umfasst, der aus einem unteren Magnetjoch (1801), einer Spule (1802), einem oberen Magnetjoch (1803), Magnetpolköpfen (1804) besteht, wobei die zwei Magnetpolköpfe (1804) aufwärts und abwärts angeordnet sind und am unteren Magnetjoch (1801) und am oberen Magnetjoch (1803) fixiert sind, wobei die Materialprobe zwischen den zwei Magnetpolköpfen (1804) zu positionieren ist und die Magnetfeldintensität zwischen den zwei Magnetpolköpfen (1804) von einer auf die Spule (1802) geladenen Stromstärke anhängig ist,
das elektrische Feldbeanspruchungsmodul (19) extern mit einer Hochspannungsgleichstromzufuhr verbunden ist und zwei Drähte umfasst, die mit der Gleichstromzufuhr verbunden sind, um die Beanspruchung des elektrischen Felds durchzuführen, wobei die zwei Drähte dazu ausgelegt sind, jeweils über leitfähigen Silberklebstoff mit zwei entgegengesetzten Flächen der Materialprobe verbunden zu sein; und
wobei sich das gesamte Prüfinstrument in der Vakuumkammer (4) befindet, um die Zündspannung zwischen den zwei Drähten zu verringern, um eine erhöhte elektrische Feldintensität bei der elektrischen Feldbeanspruchungsprüfung zuzulassen.

8. Prüfinstrument nach Anspruch 6, wobei die In-Situ-Überwachungsplattform (2) dazu verwendet wird, den Verformungsschaden, die mikrostrukturellen Veränderungen und die Eigenschaftsentwicklung der Materialprobe unter der Einwirkung der kombinierten mechanischen Beanspruchung und multiphysikalischen Feldbeanspruchung dynamisch zu überwachen; wobei durch genaue Einstellung der Position und Ausrichtung der verschiedenen Überwachungsmodule die dynamische Echtzeit-In-Situ-Überwachung der mikrokosmischen Verformung, des Schadensmechanismus, der mikrostrukturellen Veränderungen und Eigenschaftsentwicklung der Materialprobe unter der kombinierten mechanischen Beanspruchung und multiphysikalischen Feldbeanspruchung durchgeführt wird; wobei die In-Situ-Überwachungsplattform (2) ein optisches mikroskopisches Bildgebungsüberwachungsmodul (21), ein Infrarot-Wärmebildgebungsüberwachungsmodul (22), ein mikroskopisches Raman-Spektrumüberwachungsmodul (23), ein Querbeanspruchungsüberwachungsmodul (24) und ein Versatzschwenkträgermodul (25) umfasst; wobei das optische mikroskopische Bildgebungsüberwachungsmodul (21) und das mikroskopische Raman-Spektrumüberwachungsmodul (23) auf zwei Seiten der kombinierten mechanischen Beanspruchungs- und/oder multiphysikalischen Feldbeanspruchungsprüfungsplattform (1) angeordnet und an der Schwingungsisolierungsbasis (3) montiert sind; wobei das Versatzschwenkträgermodul (25) an der Schwingungsisolierungsbasis (3) montiert ist und dadurch beim Tragen der kombinierten mechanischen Beanspruchungs- und/oder multiphysikalischen Feldbeanspruchungsprüfungsplattform (1) viele Überwachungspositionen für jedes der In-Situ-Überwachungsmodule vorsieht; wobei das Infrarot-Wärmebildgebungsüberwachungsmodul (22) am Querbeanspruchungsüberwachungsmodul (24) montiert ist und das Querbeanspruchungsüberwachungsmodul (24) an der kombinierten mechanischen Beanspruchungs- und/oder multiphysikalischen Feldbeanspruchungsprüfungsplattform (1) montiert ist.

9. Prüfinstrument nach Anspruch 8, wobei die Positionseinstellung in drei Richtungen, X, Y und Z, sowohl im optischen mikroskopischen Bildgebungsüberwachungsmodul (21) als auch im mikroskopischen Raman-Spektrumüberwachungsmodul (23) durchgeführt wird und die Umwandlung des Anzeigebereichs und die Fokussierung der Bildgebungsinstrumente durch eine erste X-Achsen-Bewegungseinheit (2101) und eine zweite X-Achsen-Bewegungseinheit (2301), eine erste Y-Achsen-Bewegungseinheit I (2102) und eine zweite Y-Achsen-Bewegungseinheit (2302) sowie eine erste Z-Achsen-Bewegungseinheit I (2104) und eine zweite Z-Achsen-Bewegungseinheit (2304) erreicht wird; wobei der anfängliche Überwachungswinkel und die anfängliche Überwachungsposition des mikroskopischen Raman-Spektrometers (2315) durch Einstellen des Drehbügels (2305) und des Entfernungseinstellungshandrads (2313) erreicht wird, wodurch ein größerer Überwachungsbereich erhalten wird; wobei das mikroskopische Raman-Spektrometer (2315) in Form eines CCD-Elements vorgesehen ist, dessen Rückseite durch eine Standard-C-Schnittstelle in ein Raman-Spektrometer integriert ist; wobei eine lokale kleine Fläche aus dem Sichtbereich entsprechend dem mikroskopischen Bild ausgewählt wird und die Texturkomponentenanalyse der kleinen Fläche durch das Raman-Spektrometer durchgeführt wird; wobei die Mikrostrukturüberwachung und Texturkomponentenveränderungsüberwachung der Materialprobe in der kombinierten mechanischen Beanspruchungs- und/oder multiphysikalischen Feldkopplungsprüfung jeweils durch das optische mikroskopische Bildgebungsüberwachungsmodul (21) und das mikroskopische Raman-Spektrumüberwachungsmodul (23) durchgeführt werden; und wobei das Infrarot-Wärmebildgebungsüberwachungsmodul (22) die Temperaturverteilung der Materialprobe unter dem Temperaturfeld in Echtzeit überwacht.

10. Prüfverfahren zur In-Situ-Prüfung von Materialeigenschaften einer Materialprobe, die unter einer kombinierten mechanischen Beanspruchung aus einer oder mehreren von vier mechanischen Beanspruchungen umfassend Dehnung/Verdichtung, niederzyklische Ermüdung, Torsion und Biegung und/oder unter einem externen multiphysikalischen Feld bestehend aus einem Spannungs-, Wärme-, elektrischen und/oder Magnetfeld, das mit der Probe gekoppelt ist, zu prüfen ist, mit dem Prüfinstrument nach Anspruch 8 oder 9, wobei sich das Prüfverfahren auf ein Prüfverfahren einer mikrokosmischen Materialeigenschaft auf Grundlage einer Dehnungsprüfung bezieht und die folgenden Schritte umfasst: Fixieren der dehnenden Materialprobe (51) am Einspannkörper des aktiven Endes (120116) und am Einspannkörper des fixierten Endes (120204) mittels einer dehnenden Einspannplatte des aktiven Endes (120115) und einer dehnenden Einspannplatte des fixierten Endes (120205) und Bewirken, dass das Dehnungs-/Verdichtungsbeanspruchungsmodul (11) den Dehnungsschlitten am Torsionsende (1103) und den Dehnungsschlitten am Ermüdungsende (1104) antreibt, sich rückwärts zu bewegen, um die Dehnungsbeanspruchung auf die dehnende Materialprobe (51) zu erreichen; wobei die Torsionsbeanspruchung der dehnenden Materialprobe (51) durch das Torsionsbeanspruchungsmodul (12) erreicht wird; wobei die Dehnungsbelastung und die Torsionsbelastung der dehnenden Materialprobe (51) vom ersten linearen Gitterlesekopf (1105) bzw. vom ersten kreisförmigen Gitterlesekopf (120117) gemessen wird und die Dehnungsspannung und die Torsionsspannung durch den kombinierten Dehnungs-Torsions-Sensor (120210) gemessen wird; wobei das niederzyklische Ermüdungsbeanspruchungsmodul (14) eine niederzyklische Ermüdungsbeanspruchung auf die dehnende Materialprobe (51) unter einer Dehnungsbeanspruchung aufbringt; wobei durch Antreiben des Biegebeanspruchungsmoduls (13) in die Arbeitsstellung mittels des Querbeanspruchungsüberwachungsmoduls (24) die Biegebeanspruchung auf die dehnende Materialprobe (51) aufgebracht wird und die Biegekraft durch den Drucksensor (1303) gemessen wird; wobei das elektrische Feld vom elektrischen Feldbeanspruchungsmodul (19) auf die dehnende Materialprobe (51) aufgebracht wird, während die kombinierte mechanische Beanspruchung aufgebracht wird, wobei das Magnetfeld vom Magnetfeldbeanspruchungsmodul (18) auf die dehnende Materialprobe (51) aufgebracht wird, wobei die Intensität des aufgebrachten elektrischen Felds und die Intensität des aufgebrachten Magnetfelds von den entsprechenden Instrumenten gesteuert wird und die elektrische Hystereseschleife und die magnetische Hystereseschleife während der Prüfung gemessen werden; wobei die hohe Temperatur vom Hochtemperaturbeanspruchungsmodul (16) auf die dehnende Materialprobe (51) aufgebracht wird und anschließend das Infrarot-Wärmebildgebungsüberwachungsmodul (22) vom Querbeanspruchungsüberwachungsmodul (24) in die Arbeitsstellung bewegt wird, um die Temperaturfeldinformationen der dehnenden Materialprobe (51) zu messen; wobei das Niedrigtemperaturbeanspruchungsmodul (17) ferner eine niedrige Temperatur auf die dehnende Materialprobe (51) aufbringt; wobei während des Betriebs die In-Situ-Überwachung des Verformungsschadens und der Bruchform der dehnenden Materialprobe (51) vom optischen mikroskopischen Bildgebungsüberwachungsmodul (21) ausgeführt werden; wobei das Mikro-Nano-Eindruckprüfmodul (15) jederzeit während der Prüfung vom Querbeanspruchungsüberwachungsmodul (24) in die Arbeitsstellung gewechselt wird, wobei die Oberfläche des Prüflings einer Mikro-Nano-Eindruckprüfung unterzogen wird und der anfängliche Eindruckvorschub durch die Linearbewegung der Mikro-Nano-Eindruckvorschubeinheit (2403) durchgeführt wird; wobei der piezoelektrische Stapel des Eindruckprüfmoduls (1505) den Eindruckprüfkörper (1509) über ein flexibles Eindruckgelenk (1502) und den Eindrückkraftsensor (1508) antreibt, um einen genauen Vorschub zu erhalten; wobei eine Mikro-Nano-Eindruckkurve mit den Informationen über die Eindrückkraft und das Eindrückausmaß, die vom Eindrückkraftsensor (1508) und vom kapazitiven Sensor für leichte Verschiebung (1506) erhalten werden, gezeichnet wird; wobei bei einem derartigen Vorgang die kombinierte mechanische Beanspruchungs- und/oder multiphysikalische Feldbeanspruchungsprüfungsplattform (1) innerhalb des Überwachungsbereichs des mikroskopischen Raman-Spektrumüberwachungsmoduls (23) durch das Versatzschwenkträgermodul (25) eingestellt wird, wobei die In-Situ-Prüfung im Eindrückvorgang durchgeführt wird und gleichzeitig die Raman-Spektruminformationen der lokalen kleinen Fläche erhalten werden.

**Revendications**

1. Instrument de test pour tester in situ la propriété d'un échantillon de matériau à tester sous une charge mécanique composite d'une ou de plusieurs charges parmi quatre charges mécaniques d'étirage/compression, de fatigue oligocyclique, de torsion et de flexion, et/ou sous un champ multi-physique externe constitué d'un champ de contrainte, thermique, électrique et/ou magnétique couplé à l'échantillon, l'instrument de test comprenant

   une plateforme de test de charge mécanique composite et/ou de chargement de champ multi-physique (1), une plateforme de surveillance in situ (2) et
   une base d'isolation contre les vibrations (3) pour supporter la plateforme de test de charge mécanique composite et/ou de chargement de champ multi-physique (1) et la plateforme de surveillance in situ (2) pour fournir une installation de base et un positionnement pour la charge mécanique composite et/ou la plateforme de test de charge mécanique composite et/ou de chargement de champ multi-physique (1) et la plateforme de surveillance in situ (2) et pour fournir un traitement d'isolation contre les vibrations efficace pour le processus de test,
   dans lequel la plateforme de test de charge mécanique composite et/ou de chargement de champ multi-physique (1) est configurée pour appliquer la charge mécanique composite à l'échantillon de matériau à tester, et en même temps, est configurée pour détecter précisément un signal de charge et un signal de déformation de telle sorte qu'un test de propriété mécanique du matériau sous la charge mécanique composite soit réalisé ; et
   dans lequel selon les conditions de test, le champ multi-physique est appliqué à l'échantillon de matériau à tester, et une mesure précise de paramètres de chargement de champ physique externe et de paramètres de propriété physique correspondants du matériau sont obtenus ;
   dans lequel la plateforme de test de charge mécanique composite et/ou de chargement de champ multi-physique (1) est en outre configurée pour appliquer une charge complexe d'action de couplage de champ mécanique et externe dans une condition proche d'une condition de service à l'échantillon de matériau à tester, et en même temps, des paramètres de propriété physique de base du matériau sont mesurés avec précision et analysés quantitativement ;
   dans lequel la plateforme de test de charge mécanique composite et/ou de chargement de champ multi-physique (1) comprend
   un module de chargement d'étirage/compression (11) fixé à une surface de table d'une table oscillante à décalage (2501) et comprenant un chariot d'étirage d'extrémité torsion (1103) et un chariot d'étirage d'extrémité fatigue (1104),
   un module de chargement de torsion (12) comprenant deux parties, une unité active de chargement de torsion (1201) et une unité de fixation de chargement de torsion (1202) qui sont respectivement attachées au chariot d'étirage d'extrémité de torsion (1103) et au chariot d'étirage d'extrémité de fatigue (1104) du module de chargement d'étirage/compression (11),
   un module de chargement de flexion (13) comprenant un pénétrateur de flexion (1302),
   un module de chargement de fatigue oligocyclique (14) monté sur le chariot d'étirage d'extrémité de fatigue (1104) et est raccordé à une queue de l'unité de fixation de chargement de torsion (1202),
   un module de test de micro-nano-pénétration (15) comprenant un pénétrateur de pénétration (1509),
   un module de chargement à haute température (16) comprenant un chariot de réglage (1602),
   un module de chargement à basse température (17) configuré pour être couplé à une pompe de réfrigération par circulation,
   un module de chargement de champ magnétique (18) comprenant un rail de guidage de chariot de réglage (1805),
un module de chargement de champ électrique (19) configuré pour être couplé à une alimentation électrique en courant continu externe, et
un module de surveillance d'imagerie thermique infrarouge (22),
un module d'observation de chargement latéral (24) comprenant une unité d'alimentation de flexion (2401) à laquelle le module de chargement de flexion (13) est fixé, une unité d'alimentation d'imageur thermique infrarouge (2402) à laquelle le module de surveillance d'imagerie thermique infrarouge (22) est fixé, et une unité d'alimentation de pénétration (2403) à laquelle le module de test de micro-nano-pénétration (15) est fixé,
une unité de commutation de fonction (2404) sur laquelle l'unité d'alimentation de flexion (2401), l'unité d'alimentation d'imageur thermique infrarouge (2402) et l'unité d'alimentation de micro-nano-pénétration (2403) sont montées, dans lequel un mouvement de va-et-vient de l'unité de commutation de fonction réalise une sélection de position et une commutation de station de travail du module de chargement de flexion (13), du module de test de micro-nano-pénétration (15), et du module de surveillance d'imagerie thermique infrarouge (22) ;
dans lequel un mouvement linéaire de l'unité d'alimentation d'imageur thermique infrarouge (2402) est configuré pour régler une plage de visualisation du module de surveillance d'imagerie thermique infrarouge (22), un mouvement linéaire de l'unité d'alimentation de flexion (2401) est configuré pour entraîner le pénétrateur de flexion (1302) afin d'obtenir la charge de flexion, et un mouvement linéaire de l'unité d'alimentation de pénétration (2403) est configuré afin d'entraîner le pénétrateur de pénétration (1509) à positionner initialement un point d'appui ; et
dans lequel le module de chargement à haute température (16) est raccordé au module de chargement de champ magnétique (18) par le chariot de réglage (1602) et le rail de guidage de chariot de réglage (1805), et dans lequel le module de chargement de champ magnétique (18) et le module d'observation de chargement latéral (24) sont respectivement fixés au module de chargement d'étirage/compression (11) sur deux côtés d'un axe principal du module de chargement d'étirage/compression (11).

2. Instrument de test selon la revendication 1, comprenant en outre une chambre à vide (4) et une pompe à vide,

dans lequel une base d'isolation contre les vibrations (3) est intégrée dans la chambre à vide (4) pour empêcher la vibration générée pendant le fonctionnement de la pompe à vide d'affecter l'effet de surveillance in situ de l'instrument ;
dans lequel la plateforme de test de charge mécanique et/ou de chargement de champ multi-physique composite (1), l'agencement de surveillance in situ (2) et la chambre à vide (4) sont intégrés pour réaliser la charge mécanique composite et/ou le test de chargement de champ multi-physique et la surveillance in situ dans un environnement sous vide ;
dans lequel la charge mécanique composite et/ou la plateforme de test de chargement de champ multi-physique (1) est placée sur un module de support oscillant à décalage (25) dont la table oscillante à décalage (2501) est placée sur un rail de guidage de charge lourde (2502),
dans lequel la plateforme de test de charge mécanique et/ou de chargement de champ multi-physique composite (1) et la table oscillante à décalage (2501) peuvent être retirées de la chambre à vide (4) pour faciliter le remplacement de l'échantillon de matériau ; et
dans lequel un chariot d'outil de support (6) est raccordé à la base d'isolation contre les vibrations (3) dans la chambre à vide (4) par amarrage des rails de guidage, et dans lequel la charge mécanique composite et/ou la plateforme de test de chargement de champ multi-physique (1) peuvent être complètement retirées de la chambre à vide (4) afin de faciliter la régulation et l'entretien de celle-ci.

3. Instrument de test selon la revendication 1, dans lequel le module de chargement d'étirage/compression (11) adopte une structure d'étirage bidirectionnelle, et comprend

un servomoteur d'étirage/compression (1101) entraînant une vis bidirectionnelle (1102) pour déplacer un chariot d'étirage d'extrémité de torsion (1103) et un chariot d'étirage d'extrémité de fatigue (1104) de façon à assurer la cohérence de la vitesse de déplacement et de la course sur deux côtés, en appliquant la charge d'étirage/compression, et
une première tête de lecture de réseau linéaire (1105) et une deuxième tête de lecture de réseau linéaire (1118) pour mesurer la déformation de chargement d'étirage/compression.

4. Instrument de test selon la revendication 3,

dans lequel Le module de chargement de torsion (12) comprend deux parties, c'est-à-dire une unité active de chargement de torsion (1201) et une unité de fixation de chargement de torsion (1202), et est prévu de manière qu'une extrémité de celui-ci s'entortille et que l'autre extrémité soit fixe, dans lequel l'unité active de chargement de torsion (1201) est d'une extrémité de chargement, un servomoteur de torsion (120104) entraîne un engrenage d'entraînement de torsion (120108) et un engrenage entraîné par torsion (120109) pour déplacer un corps de serrage d'extrémité active (120116) afin de réaliser le chargement du couple ; dans lequel l'unité de fixation de chargement de torsion (1202) est une extrémité fixe, le couple est transféré d'un corps de serrage d'extrémité fixe (120204) et d'un arbre de raccordement (120209) à un capteur composite d'étirage-torsion (120210) pour réaliser une mesure de la force d'étirage et du couple ; le corps de serrage d'extrémité active (120116) et le corps de serrage d'extrémité fixe (120204) sont respectivement installés avec une première tête de lecture de réseau circulaire (120117) et une deuxième tête de lecture de réseau circulaire (120202), et une mesure précise de l'angle de torsion est obtenue par mesure de la différence d'angle lue dans le test de mesure de torsion ; dans lequel un joint rotatif (120106) de l'unité active de chargement de torsion (1201) comprend un stator de joint rotatif (120106B) et un rotor de joint rotatif (120106A) sur lequel une rainure annulaire communiquant avec une ouverture d'écoulement dans le stator de joint rotatif (120106B) est établie, de façon à toujours maintenir la distribution de fluide lorsqu'il y a une rotation relative entre le stator et le rotor ; un trajet d'écoulement dans le corps de serrage d'extrémité active (120116) est amarré avec un trajet d'écoulement dans le joint rotatif (120106) par une bride de raccordement (120107), ce qui permet l'introduction et la circulation du fluide frigorigène lorsque le corps de serrage d'extrémité active (120116) est mis en rotation en raison de la charge de torsion, le module de chargement à basse température (17) pompe le liquide frigorigène vers les trajets d'écoulement établis à l'intérieur du corps de serrage d'extrémité active (120116) et du corps de serrage d'extrémité fixe (120204) au moyen du trajet d'écoulement de réfrigération interne à l'intérieur du corps de serrage d'extrémité active (120116) et du corps de serrage d'extrémité fixe (120204) par le biais de la pompe de réfrigération à basse température externe, et l'échantillon de matériau est réfrigéré par conduction thermique, créant un environnement de test à basse température pour l'échantillon de matériau.

5. Instrument de test selon la revendication 1, dans lequel un cadre interne d'une charnière flexible de module de chargement de fatigue (1402) du module de chargement de fatigue oligocyclique (14) est fixé à une base inférieure de module de chargement de fatigue (1401), et un cadre externe est raccordé à une plaque de raccordement (120211) ; un empilement piézoélectrique de module de chargement de fatigue (1403) entraîne le corps de serrage d'extrémité fixe (120204) au moyen de la charnière flexible de module de chargement de fatigue (1402), de la plaque de raccordement (120211), et d'un capteur composite d'étirage-torsion (120210) pour générer un léger déplacement en va-et-vient en haute fréquence, ce qui permet d'obtenir la charge de fatigue sur l'échantillon de matériau d'étirage (51) sous l'action d'une charge de pré-étirage ; sous une grande charge d'étirage, la grande charge d'étirage est retirée par resserrage des vis pour assujettir une plaque de déchargement (120212) à la plaque de raccordement (120211) et au chariot d'étirage d'extrémité de fatigue (1104), empêchant un endommagement de l'empilement piézoélectrique de module de chargement de fatigue (1403).

6. Instrument de test selon la revendication 4, dans lequel le module de test de micro-nano-pénétration (15) obtient une alimentation de pénétration initiale par un mouvement linéaire de l'unité d'alimentation de pénétration (2403), l'empilement piézoélectrique de module de test de pénétration (1505) entraîne le pénétrateur de pénétration (1509) par une charnière flexible de pénétration (1502) pour obtenir une alimentation précise, une force de pression pendant le processus d'appui est acquise par un capteur de force d'appui (1508), et la profondeur d'appui du pénétrateur de pénétration (1509) est surveillée par un capteur de déplacement de lumière capacitif (1506).

7. Instrument de test selon la revendication 2, dans lequel

le module de chargement à haute température (16) comprend une lampe chauffante halogène (1601) pour générer le chargement avec le champ haute température par irradiation de l'échantillon de matériau avec une lumière focalisée, un chariot de réglage (1602) et une plaque de montage de lampe halogène (1603), dans lequel la lampe chauffante halogène (1601) est raccordée à la plaque de montage de lampe halogène (1603) par des vis et montée sur le chariot de réglage (1602) ; et dans lequel la lampe chauffante à halogène (1601) est amovible au moyen du chariot de réglage (1602) pour empêcher le trajet optique du module de surveillance in situ d'être bloqué lorsqu'une fonction de champ à haute température n'est pas nécessaire,

dans lequel le module de chargement de champ magnétique (18) comprend un électroaimant pouvant être commandé constitué d'une culasse magnétique inférieure (1801), d'une bobine (1802), d'une culasse magnétique supérieure (1803), de têtes de pôle magnétique (1804), les deux têtes de pôle magnétique (1804) sont agencées vers le haut et vers le bas et sont fixées à la culasse magnétique inférieure (1801) et à la culasse magnétique supérieure (1803), dans lequel l'échantillon de matériau est destiné à être positionné entre les deux têtes de pôle magnétique (1804), et l'intensité de champ magnétique entre les deux têtes de pôle magnétique (1804) dépend d'un courant chargé sur la bobine (1802),

le module de chargement de champ électrique (19) est raccordé de façon externe à une alimentation électrique en courant continu à haute tension, et comprend deux fils raccordés à l'alimentation électrique en courant continu pour réaliser le chargement du champ électrique, dans lequel les deux fils sont configurés pour être raccordés à deux surfaces opposées de l'échantillon de matériau par de la colle d'argent conductrice, respectivement ; et

dans lequel l'instrument de test tout entier est situé dans la chambre à vide (4) pour réduire la tension de claquage entre les deux fils afin de permettre une intensité de champ électrique accrue dans le test de chargement de champ électrique.

8. Instrument de test selon la revendication 6, dans lequel la plateforme de surveillance in situ (2) est utilisée pour surveiller dynamiquement l'endommagement par déformation, le changement de microstructure et l'évolution de propriété de l'échantillon de matériau sous l'action de la charge mécanique composite et de la charge de champ multi-physique ; par le biais d'un réglage précis de la position et de la posture des divers modules de surveillance, la surveillance in situ dynamique en temps réel de la déformation microcosmique, du mécanisme d'endommagement, du changement de microstructure et de l'évolution de propriété des échantillons de matériau sous la charge mécanique composite et la charge de champ multi-physique est réalisée ; la plateforme de surveillance in situ (2) comprend un module de surveillance d'imagerie microscopique optique (21), un module de surveillance d'imagerie thermique infrarouge (22), un module de surveillance de spectre Raman microscopique (23), un module d'observation de chargement latéral (24) et un module de support oscillant décalé (25) ; le module de surveillance d'imagerie microscopique optique (21) et le module de surveillance de spectre Raman microscopique (23) sont agencés sur deux côtés de la charge mécanique composite et/ou de la plateforme de test de chargement de champ physique multiple (1) et montés sur la base d'isolation de vibrations (3) ; le module de support oscillant décalé (25) est monté sur la base d'isolation de vibrations (3), fournissant des positions d'observation abondantes pour chacun des modules d'observation in situ tout en portant la charge mécanique composite et/ou la plateforme de test de chargement de champ multi-physique (1) ; le module de surveillance d'imagerie thermique infrarouge (22) est monté sur le module d'observation de chargement latéral (24) et le module d'observation de chargement latéral (24) est monté sur la charge mécanique composite et/ou la plateforme de test de chargement de champ multi-physique (1).

9. Instrument de test selon la revendication 8, dans lequel le réglage de position en trois directions, X, Y et Z, est réalisé à la fois dans le module de surveillance d'imagerie microscopique optique (21) et le module de surveillance de spectre Raman microscopique (23), et la transformation du champ de vue d'affichage et la focalisation des instruments d'imagerie sont obtenues par une première unité de déplacement d'axe X (2101) et une deuxième unité de déplacement d'axe X (2301), une première unité de déplacement d'axe Y I (2102) et une deuxième unité de déplacement d'axe Y (2302), ainsi qu'une première unité de déplacement d'axe Z I (2104) et une deuxième unité de déplacement d'axe Z (2304) ; l'angle de surveillance initial et la position de surveillance initiale du spectromètre Raman microscopique (2315) sont réglés par réglage du support rotatif (2305) et de la manette à main de réglage de distance (2313), ce qui permet d'obtenir une plage de surveillance plus étendue ; le spectromètre Raman microscopique (2315) est sous la forme d'un CCD intégré dont l'arrière est intégré à un spectromètre Raman par le biais d'une interface C standard ; une zone minuscule locale est sélectionnée dans la plage visible selon l'image microscopique et l'analyse de composante de texture de la zone minuscule par le spectromètre Raman est réalisée ; la surveillance de microstructure et la surveillance de changement de composante de texture de l'échantillon de matériau dans la charge mécanique composite et/ou le test de couplage de champ multi-physique sont respectivement réalisées par le module de surveillance d'imagerie microscopique optique (21) et le module de surveillance de spectre Raman microscopique (23) ; et le module de surveillance d'imagerie thermique infrarouge (22) surveille la distribution de température de l'échantillon de matériau sous le champ de température en temps réel.

10. Procédé de test pour tester in situ la propriété d'un échantillon de matériau à tester sous une charge mécanique composite d'une ou plusieurs charges parmi les quatre charges mécaniques d'étirement/compression, de fatigue oligocyclique, de torsion et de flexion, et/ou sous un champ multi-physique externe constitué d'un champ de contrainte, thermique, électrique et/ou magnétique couplé à l'échantillon, avec l'instrument de test selon la revendication 8 ou la revendication 9, dans lequel le procédé de test se rapporte à un procédé de test in situ de propriété microcosmique de matériau basé sur un test d'étirage, et comprend les étapes suivantes consistant à : fixer l'échantillon de matériau d'étirage (51) au corps de serrage d'extrémité active (120116) et au corps de serrage d'extrémité fixe (120204) par un plateau de serrage d'étirage d'extrémité active (120115) et un plateau de serrage d'étirage d'extrémité fixe (120205), et amener le module de chargement d'étirage/compression (11) à entraîner le chariot d'étirage d'extrémité de torsion (1103) et le chariot d'étirage d'extrémité de fatigue (1104) à se déplacer en sens inverse de façon à obtenir le chargement par étirage sur l'échantillon de matériau d'étirage (51) ; dans lequel le chargement de torsion sur l'échantillon de matériau d'étirage (51) est obtenu par le module de chargement de torsion (12) ; la contrainte d'étirage et la contrainte de torsion de l'échantillon de matériau d'étirage (51) sont mesurées par la première tête de lecture de réseau linéaire (1105) et la première tête de lecture de réseau circulaire (120117), respectivement, et la contrainte d'étirage et la contrainte de torsion sont mesurées par le capteur composite d'étirage et de torsion (120210) ; le module de chargement de fatigue oligocyclique (14) applique une charge de fatigue oligocyclique à l'échantillon de matériau d'étirage (51) sous une charge d'étirage ; par entraînement du module de chargement de flexion (13) vers la position de travail au moyen du module d'observation de chargement latéral (24), la charge de flexion est appliquée à l'échantillon de matériau d'étirage (51) et la force de flexion est mesurée par le capteur de pression (1303) ; le champ électrique est appliqué à l'échantillon de matériau d'étirage (51) par le module de chargement de champ électrique (19) tandis que la charge mécanique composite est appliquée, le champ magnétique est appliqué à l'échantillon de matériau d'étirage (51) par le module de chargement de champ magnétique (18), l'intensité du champ électrique appliqué et l'intensité du champ magnétique appliqué sont commandées par les instruments pertinents, et la boucle d'hystérésis électrique et la boucle d'hystérésis magnétique sont mesurées pendant le test ; la température élevée est appliquée à l'échantillon de matériau d'étirage (51) par le module de chargement à haute température (16), puis le module de surveillance d'imagerie thermique infrarouge (22) est déplacé vers la position de travail par le module d'observation de chargement latéral (24) pour mesurer les informations de champ de température de l'échantillon de matériau d'étirage (51) ; le module de chargement à basse température (17) applique en outre une basse température à l'échantillon de matériau d'étirage (51) ; pendant le fonctionnement, l'observation in situ de l'endommagement par déformation et la forme de défaillance de l'échantillon de matériau d'étirage (51) sont effectuées par le module de surveillance d'imagerie microscopique optique (21) ; à tout moment pendant le test, le module de test de micro-nano-pénétration (15) est commuté vers la position de travail par le module d'observation de chargement latéral (24), la surface de la pièce d'essai est soumise à un essai de micro-nano-pénétration, et l'alimentation de pénétration initiale est effectuée par le mouvement linéaire de l'unité d'alimentation de pénétration (2403) ; l'empilement piézoélectrique de module de test de pénétration (1505) entraîne le pénétrateur de pénétration (1509) par le biais de la charnière flexible à pénétration (1502) et le capteur de force d'appui (1508) pour obtenir une alimentation précise; une courbe de micro-nano-pénétration est dessinée avec les informations concernant la force d'appui et la quantité d'appui qui sont acquises par le capteur de force d'appui (1508) et le capteur capacitif de déplacement de lumière (1506) ; dans un tel processus, la charge mécanique composite et/ou la plateforme de test de chargement de champ multi-physique (1) est réglée à l'intérieur de la plage d'observation du module de surveillance de spectre Raman microscopique (23) par le module de support oscillant décalé (25), le test in situ dans le processus d'appui est effectué et en même temps les informations de spectre Raman de la zone minuscule locale sont obtenues.

Fig. 1

Fig. 2

Fig. 3

Fig. 4

Fig. 5

Fig. 6

150404

150405

150403

150406

1506

150402

150401

Fig. 7

input port
of coolant

120106B  120106A  120107  120116  120115

17

output port
of coolant

Fig. 8

120116  120115  51  120205  120204

Fig. 9

120116 / 120118 / 52 / 120213 / 120204

Fig. 10

1803 1805 1602 1603

1802

1804

1801 1601

Fig. 11

Fig. 12

2105

2104

2106

2102    2103

2101

2107

Fig. 13

Fig. 14

4

1

2501

6

2502

3

F i g. 15

60°

2315
51
a

AA

2501

Fig. 16

90°

2315
51

a'

AA

2501
a

Fig. 17

$F_2$
$(F_3)$

M

$F_1$
$(F'_1)$

torsion
end

test
piece

$F_1$
$(F'_1)$

fatigue
end

Fig. 18

coolant

heating
lamp

coolant

high voltage
electrode

vertical
magnetic
field

Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 203551383 U
- CN 204374017 U
- CN 103353431 B
- CN 103499483 A